(19) Europäisches Patentamt
European Patent Office
Office européen des brevets

(11) EP 2 679 608 A1

(12) EUROPEAN PATENT APPLICATION
published in accordance with Art. 153(4) EPC

(43) Date of publication:
01.01.2014 Bulletin 2014/01

(21) Application number: 12750034.6

(22) Date of filing: 24.02.2012

(51) Int Cl.:
*C08F 2/44* (2006.01) *C08F 283/06* (2006.01)
*C08F 285/00* (2006.01) *C08G 18/63* (2006.01)

(86) International application number:
PCT/JP2012/054650

(87) International publication number:
WO 2012/115251 (30.08.2012 Gazette 2012/35)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 25.02.2011 JP 2011040025

(71) Applicant: Asahi Glass Company, Limited
Tokyo 100-8405 (JP)

(72) Inventors:
- SUZUKI, Chitoshi
Tokyo 100-8405 (JP)
- HAYASHI, Tomohiro
Tokyo 100-8405 (JP)
- HARADA, Kensuke
Tokyo 100-8405 (JP)
- SASAKI, Takayuki
Tokyo 100-8405 (JP)
- HORIE, Akio
Tokyo 100-8405 (JP)
- ITO, Takashi
Tokyo 100-8405 (JP)

(74) Representative: Hartz, Nikolai
Wächtershäuser & Hartz
Patentanwaltspartnerschaft
Ottostrasse 4
80333 München (DE)

# (54) HIGH-CONCENTRATION POLYMER POLYOL AND METHOD FOR MANUFACTURING SAME

(57) If it is attempted to produce a polymer polyol at a high concentration, there will be a problem such that during polymerization of a monomer to form fine polymer particles, particles are likely to aggregate one another to form aggregates, and storage stability of the polymer polyol tends to deteriorate. A method for producing a polymer polyol is presented which comprises polymerizing at least one type of ethylenically unsaturated monomer together with a seed particle dispersion, in a polyol, wherein the seed particle dispersion is one obtained by polymerizing an ethylenically unsaturated monomer in the presence of an ethylenically unsaturated macromonomer, a solvent and a chain transfer agent, and the ethylenically unsaturated macromonomer is a reaction product of a specific polyol, an isocyanate compound and an ethylenically unsaturated monomer having a hydroxy group.

EP 2 679 608 A1

## Description

TECHNICAL FIELD

The present invention relates to a polymer polyol and a method for its production.

BACKGROUND ART

A compound having fine polymer particles of an ethylenic polymer dispersed in a polyol such as a polyether polyol or a polyester polyol, is called a polymer polyol and is used as a starting material for polyurethanes such as polyurethane foams or RIM, and it is primarily used to improve the physical properties such as the hardness, air permeability, etc. of such a polyurethane composition.

A method for producing a polymer polyol is a method of polymerizing an ethylenically unsaturated monomer such as acrylonitrile or styrene in a polyol. For example, as disclosed in Patent Documents 1, 2, etc., polymerization of an ethylenically unsaturated monomer is carried out in a saturated polyol having no polymerizable unsaturated group, in some cases, under such a condition that an unsaturated polyol having a polymerizable unsaturated group may be present, and thereafter, an unreacted content is removed. As the polyol, various polyether polyols or polyester polyols are known, and a typical polyol is a polyoxyalkylene type polyol.

In recent years, it has been desired to reduce the weight and increase the hardness of a polyurethane foam, and for this purpose, it has been studied to increase the concentration of fine polymer particles to be dispersed in the polyol for the polymer polyol. In general, as the polymer concentration increases, aggregation of particles one another tends to take place in the process of growth of particles during polymerization of the monomer, thereby to form aggregates, and it becomes difficult to produce a polymer polyol having fine polymer particles stably dispersed therein. As a result, as the polymer concentration in the polymer polyol increases, its viscosity increases exponentially to bring about problems in fluidity such that in its use, uniform mixing with a polyisocyanate compound tends to be difficult, its flow resistance in a mixing machine increases so that a large force will be required for e.g. a pump, and control of the flow rate tends to be difficult. Therefore, a polymer polyol having a high polymer concentration and a low viscosity is desired.

Dispersion stability of a polymer polyol is considered to be brought about by a small amount of a graft polymer to be formed "in situ" from growing polymer chains and polyol molecules. Conventional attempts to increase the concentration and reduce the viscosity of the polymer in the polymer polyol are based on this idea and ones wherein in order to further improve the dispersion stability of the polymer polyol, a "dispersion stabilizer" is used which is an unsaturated bond-containing polyol so-called "macromer" having a small amount of unsaturated bonds introduced to a polyol. The above-mentioned Patent Documents 2 and 3 are ones based on this concept.

However, in the production of a highly concentrated polymer polyol, dispersion stabilization by a macromer is limited, and therefore, so-called "seed polymerization" has been studied wherein in a first step before preparing the desired polymer polyol, a polymer polyol having a concentration lower than the desired polymer polyol is prepared, and in a second step, by using it as seed particles, polymerization is carried out by adding anew predetermined amounts of a monomer and a polymerization initiator.

Patent Document 4 proposes a seed polymerization method wherein an ethylenically unsaturated monomer such as acrylonitrile or styrene is polymerized in a macromonomer as a dispersion stabilizer in the presence of a solvent. However, in the disclosed technique, the polymer concentration is at a level of 30% at the maximum, i.e. far from satisfying the current demand at the market.

As a dispersion stabilizer to be used for the preparation of a seed particle dispersion, Patent Document 5 discloses a macromer obtainable by reacting a polyol with maleic anhydride or fumaric acid, followed by a reaction with propylene oxide or ethylene oxide. However, such an unsaturated bond-containing polyether ester type macromer is not good in the copolymerizability with other monomers, since polymerizable unsaturated groups are present in polyether chains, and if such a seed particle dispersion was used, there was a limit in increasing the concentration of the polymer polyol, and dispersion stabilization was inadequate. Further, Patent Document 6 discloses a macromonomer using a polyoxyalkylene polyol having a low specific unsaturation (hereinafter referred to also as unsaturation degree) employing a double metal cyanide complex catalyst (DMC catalyst), as a base polyol to be used for the preparation of a seed particle dispersion. However, when such a seed particle dispersion was used, although it was possible to prepare a highly concentrated polymer polyol, the viscosity of the obtained polymer polyol was high, and the particle size of the fine polymer particles of the obtained polymer polyol was large.

PRIOR ART DOCUMENTS

PATENT DOCUMENTS

Patent Document 1: JP-B-39-24737
Patent Document 2: JP-B-60-17372
Patent Document 3: JP-B-63-45727
Patent Document 4: US Patent No. 4,242,249
Patent Document 5: Japanese Patent No. 3,160,610
Patent Document 6: JP-A-2002-508417

DISCLOSURE OF INVENTION

TECHNICAL PROBLEM

The present invention has been made to solve the above problem and has an object to provide a method for producing a polymer polyol having a proper viscosity and having polymer particles dispersed stably at a high concentration, and a high concentration polymer polyol.

SOLUTION TO PROBLEM

The present invention provides the following constructions.

(1) A method for producing a polymer polyol, which comprises polymerizing at least one type of ethylenically unsaturated monomer (M1) together with a seed particle dispersion (E), in a polyol (A), wherein the seed particle dispersion (E) is a dispersion obtained by polymerizing an ethylenically unsaturated monomer (M2) in the presence of an ethylenically unsaturated macromonomer (B), a solvent (C) and a chain transfer agent (D), and the ethylenically unsaturated macromonomer (B) is a reaction product of a polyol (b1) having a hydroxy value of from 20 to 50 mgKOH/g and an oxyethylene group-content of at least 10 mass% and less than 30 mass%, an isocyanate compound (b2) and an ethylenically unsaturated monomer (b3) having a hydroxy group.
(2) The method for producing a polymer polyol according to the above (1), wherein the polyol (b1) a bifunctional polyoxyalkylenediol.
(3) The method for producing a polymer polyol according to the above (1) or (2), wherein the average number of hydroxy groups per one molecule of the ethylenically unsaturated macromonomer (B) is 1.
(4) The method for producing a polymer polyol according to any one of the above (1) to (3), wherein the solvent (C) is an aliphatic ether compound represented by the formula $R^1OR^2$ (wherein each of $R^1$ and $R^2$ is a $C_{1-5}$ alkyl group).
(5) The method for producing a polymer polyol according to the above (4), wherein the aliphatic ether compound is methyl-tert-butyl ether or ethyl-tert-butyl ether.
(6) The method for producing a polymer polyol according to any one of the above (1) to (5), wherein the chain transfer agent (D) is an alkyl mercaptan, and its amount is from 0.01 to 0.5 part by mass per 100 parts by mass of the total of the ethylenically unsaturated macromonomer (B), the solvent (C) and the chain transfer agent (D).
(7) The method for producing a polymer polyol according to any one of the above (1) to (6), wherein the polyol (A) has a hydroxy value of from 10 to 84 mgKOH/g and an oxyethylene group-content of from 0 to 30 mass%.
(8) The method for producing a polymer polyol according to any one of the above (1) to (7), wherein the polyol (A) has a hydroxy value of from 10 to 84 mgKOH/g and an oxyethylene group-content of from 0 to 20 mass%.
(9) The method for producing a polymer polyol according to any one of the above (1) to (8), wherein the ethylenically unsaturated monomer (M1) comprises from 30 to 100 mass% of styrene and from 70 to 0 mass% of acrylonitrile.
(10) A polymer polyol obtained by the method for producing a polymer polyol as defined in any one of the above (1) to (9).
(11) The polymer polyol according to the above (10), wherein the content of the polymer component is from 40 to 60 mass% in the polymer polyol.
(12) The polymer polyol according to the above (10) or (11), wherein the polymer component has an average particle size of at most 1.5 μm as measured by a laser diffraction/scattering particle size distribution measuring apparatus.
(13) A method for producing a polyurethane foam, which comprises reacting the polymer polyol as defined in any one of the above (10) to (12) or a polyol component containing the polymer polyol, and a polyisocyanate compound in the presence of a catalyst and a blowing agent.

ADVANTAGEOUS EFFECTS OF INVENTION

According to the present invention, it is possible to produce a polymer polyol having a proper viscosity and having polymer particles dispersed stably at a high concentration. The polymer polyol obtainable by the method of the present invention is scarcely aggregated and is excellent in the storage stability, and by using it, it is possible to constantly obtain a flexible polyurethane foam having a proper hardness. Further, by using the polymer polyol of the present invention, it is possible to obtain a rigid polyurethane foam excellent in the dimensional stability.

DESCRIPTION OF EMBODIMENTS

Now, embodiments of the present invention will be described.
The polymer component of the present invention is a reaction product formed by a reaction of a compound having an ethylenically unsaturated group and is specifically meant for a solid content in the polymer polyol. The solid content is measured by a method for measuring a polymer concentration as described hereinafter.

<Method for producing polymer polyol of the present invention>

The present invention is characterized in that in a method for producing a polymer polyol, which comprises polymerizing at least one type of ethylenically unsaturated monomer (M1) together with a seed particle dispersion (E), in a polyol (A), the seed particle dispersion (E) is a dispersion obtained by polymerizing an ethylenically unsaturated monomer (M2) in the presence of an ethylenically unsaturated macromonomer (B), a solvent (C) and a chain transfer agent (D), and the ethylenically unsaturated macromonomer (B) is a reaction product of a polyol (b1) having a hydroxy value of from 20 to 50 mgKOH/g and an oxyethylene group-content of at least 10 mass% and less than 30 mass%, an isocyanate compound (b2) and an ethylenically unsaturated monomer (b3) having a hydroxy group.

(Polyol (A))

The polyol (A) is preferably a polyoxyalkylene polyol obtained by ring-opening addition polymerization of an alkylene oxide to an initiator in the presence of a ring-opening addition polymerization catalyst.
The ring-opening addition polymerization catalyst may, for example, be an alkali metal compound catalyst or a double metal cyanide complex catalyst. The alkali metal compound catalyst may, for example, be an alkali metal such as sodium or potassium; an alkali metal alkoxide such as sodium methoxide, sodium ethoxide, sodium propoxide, potassium methoxide, potassium ethoxide or potassium propoxide; a hydroxide such as sodium hydroxide, potassium hydroxide or cesium hydroxide; or a carbonate such as sodium carbonate or potassium carbonate.
The initiator may, for example, be a polyhydric alcohol, an amine, a phenol or an alkylene oxide adduct thereof. As the initiator, a compound having from 2 to 8 active hydrogen atoms per molecule is preferred, and a polyhydric alcohol is particularly preferred.
The polyhydric alcohol may, for example, be a dihydric alcohol such as ethylene glycol, diethylene glycol, propylene glycol, 1,4-butanediol or 1,6-hexanediol; a trihydric alcohol such as glycerin, trimethylolpropane, trimethylolethane or hexanetriol; a tetrahydric alcohol such as pentaerythritol, methylene glycoxide or diglycerin; a penta-or higher-hydric alcohol such as sorbitol, mannitol or sucrose.
The amine may, for example, be an alkanolamine such as monoethanolamine, diethanolamine, triethanolamine or isopropanolamine; a heterocyclic amine such as N-(2-aminoethyl)piperazine or N-aminomethylpiperazine; an aliphatic amine such as ethylenediamine, propylenediamine or hexamethylenediamine; or an aromatic amine such as tolylenediamine or diaminodiphenylmethane.
The phenol may, for example, be bisphenol A or resorcinol.
As the initiator, one type may be used alone, or two or more types may be used in combination.
The alkylene oxide may, for example, be ethylene oxide, propylene oxide, 1,2-butylene oxide, 2,3-butylene oxide, isobutylene oxide or styrene oxide. As the alkylene oxide, one type may be used alone, or two or more types may be used in combination. As the alkylene oxide, it is preferred to use propylene oxide alone, or propylene oxide and ethylene oxide in combination. In the case of using propylene oxide and ethylene oxide in combination, propylene oxide and ethylene oxide may be sequentially reacted to form a block copolymer, or a mixture of propylene oxide and ethylene oxide may be reacted to form a random copolymer.
The hydroxy value of the polyol (A) is preferably from 10 to 84 mgKOH/g, more preferably from 14 to 70 mgKOH/g, particularly preferably from 28 to 70 mgKOH/g.
If the hydroxy value of the polyol (A) is less than 10 mgKOH/g, the viscosity of the polyol tends to be high, and the viscosity of the polymer polyol obtainable tends to be necessarily extremely high, such being undesirable. On the other hand, if it becomes higher than 84 mgKOH/g, the molecular weight of the polyol tends to be less, and a stable

polymer polyol tends to be hardly obtainable, such being undesirable.

The polyol (A) is preferably one obtainable by ring-opening polymerization of a mixture of propylene oxide and ethylene oxide to the initiator. Further, it may be one having further an oxyethylene block chain at its terminal.

The oxyethylene group-content of the polyol (A) is preferably from 0 to 30 mass%, more preferably from 0 to 25 mass%, particularly preferably from 5 to 20 mass%, in polyol (A) (100 mass%). By adjusting the oxyethylene group-content of the polyol (A) to be at most 30 mass%, the volume percentage of closed cells in the obtainable polyurethane foam will be proper, and it becomes easy to produce the polyurethane foam.

(Ethylenically unsaturated monomer (M1))

The ethylenically unsaturated monomer (M1) is one having at least one polymerizable ethylenically unsaturated bond. The ethylenically unsaturated monomer (M1) may, for example, be acrylonitrile, (meth)acrylic acid, a (meth)acrylic acid aryl ester such as phenyl (meth)acrylate, a (meth)acrylic acid alkyl ester such as methyl (meth)acrylate, acrylamide, styrene, methylstyrene, phenylstyrene, chlorostyrene, butadiene, 1,4-pentadiene or vinyl acetate. Here, (meth)acrylic acid means acrylic acid or methacrylic acid, and the same applies to other compounds. As the ethylenically unsaturated monomer (M1), one type may be used alone, or two or more types may be used in combination as a mixture. As the ethylenically unsaturated monomer (M1), a combination of acrylonitrile and styrene is preferred, in view of the stability as the polymer polyol and the properties of a foam to be obtained by using it. In such a case, the ratio (mass ratio) of acrylonitrile/styrene is preferably from 0/100 to 70/30, more preferably from 10/90 to 60/40, particularly preferably from 20/80 to 50/50.

The ratio of acrylonitrile/styrene being at least 0/100 is preferred in that the dispersion stability of polymer particles thereby increases, but if the ratio exceeds 70/30, the viscosity tends to be extremely high and not practical in the method of the present invention, and therefore, the ratio is preferably at most 70/30.

(Seed particle dispersion (E))

<Ethylenically unsaturated macromonomer (B)>

The ethylenically unsaturated macromonomer (B) proposed by the present invention is characterized in that it is a reaction product of a polyol (b1), an isocyanate compound (b2) and an ethylenically unsaturated monomer (b3) having a hydroxy group.

(Polyol (b1))

The polyol (b1) may be a polyoxyalkylene polyol obtainable by adding an alkylene oxide to a bi- or tri-functional initiator. Particularly preferred is a bifunctional polyoxyalkylene polyol, since a seed particle dispersion (E) produced by using an ethylenically unsaturated macromonomer (B) produced by using this polyol (b1) is excellent in dispersibility in the polyol (A) at the time of producing a polymer polyol. It is thereby possible to make the polymer polyol obtainable by using such a seed particle dispersion (E) to have a low viscosity and a good dispersibility of the polymer.

The hydroxy value of the polyol (b1) is from 20 to 50 mgKOH/g, preferably from 20 to 40 mgKOH/g, particularly preferably from 25 to 35 mgKOH/g. If the hydroxy value of the polyol (b1) is smaller than 20 mgKOH/g, the viscosity of the ethylenically unsaturated macromonomer tends to be high, and the viscosity of the finally obtainable polymer polyol tends to be high, and therefore, it is preferably at least 20 mgKOH/g, and if it exceeds 50 mgKOH/g, the polymer in the seed particle dispersion (E) produced by using such an ethylenically unsaturated macromonomer, tends to aggregate, and therefore, it is preferably at most 50 mgKOH/g.

The oxyethylene group-content in the polyol (b1) is at least 10 and less than 30 mass%, preferably from 15 to 25 mass%. If the oxyethylene group-content is less than 10 mass%, the viscosity of the finally obtainable polymer polyol tends to be high, and therefore, the oxyethylene group-content is preferably at least 10 mass%, and if it is 30 mass% or more, the polymer (referred to also as seed particles) in the seed particle dispersion (E) tends to aggregate, and therefore, it is preferably less than 30 mass%.

The polyol (b1) may be obtained by the same method as for the above-described polyol (A).

(Isocyanate compound (b2))

The isocyanate compound (b2) may, for example, be a diisocyanate, such as 2,4-tolylene diisocyanate (2,4-TDI), 2,6-tolylene diisocyanate (2,6-TDI), crude tolylene diisocyanate (crude TDI), 4,4'-diphenylmethane diisocyanate (4,4'-MDI), 2,4'-diphenylmethane diisocyanate (2,4'-MDI), 2,2'-diphenylmethane diisocyanate (2,2'-MDI), an isomer mixture of diphenylmethane diisocyanate (MDI), polymethylene polyphenyl isocyanate (polymeric MDI or crude MDI), toluidine diisocyanate, xylylene diisocyanate, hexamethylene diisocyanate, isophorone diisocyanate or dicyclohexylmethane diisocyanate, or a carbodiimide-modified product, burette-modified product, dimer, trimer or prepolymer of such a diisocyanate. As the isocyanate compound, one type may be used alone, or two or more types may be used in combination as a mixture. Among them, 2,4-TDI, 2,6-TDI, crude TDI or a mixture thereof, is preferred, since the viscosity of the ethylenically unsaturated macromonomer thereby obtainable becomes low. Particularly preferred is a mixture of 2,4-TDI/2,6-TDI in a 80/20 mass ratio (80/20-TDI) or their mixture in a 65/35 mass ratio (65/35-TDI).

(Ethylenically unsaturated monomer (b3) having hydroxy group)

The ethylenically unsaturated monomer (b3) having a hydroxy group may, for example, be (1) an unsaturated alcohol, such as allyl alcohol, 2-buten-1-ol or 3-buten-2-ol; or (2) an ester of an unsaturated carboxylic acid and a polyhydric alcohol, such as 2-hydroxyethyl acrylate or 2-hydroxyethyl methacrylate. As (b3), 2-hydroxyethyl acrylate or 2-hydroxyethyl methacrylate is particularly preferred in that the copolymerizability with a monomer is excellent.

(Production of ethylenically unsaturated macromonomer (B))

The ethylenically unsaturated macromonomer (B) is obtained by mixing, heating and reacting the polyol (b1), the isocyanate compound (b2) and the ethylenically unsaturated monomer (b3) having a hydroxy group.

The mixing ratio of the polyol (b1), the isocyanate compound (b2) and the ethylenically unsaturated monomer (b3) having a hydroxy group, is preferably adjusted so that the average number of unsaturated groups per molecule of the obtainable ethylenically unsaturated macromonomer (B) would be at most 1.5, particularly preferably 1.0. Accordingly, in a case where the polyol (b1) is a polyoxyalkylene diol, the average number of hydroxy groups per molecule of the ethylenically unsaturated macromonomer (B) is preferably at least 0.5, particularly preferably 1. Specifically, a case may be exemplified wherein the polyol (b1) is a polyoxyalkylene diol, the isocyanate compound (b2) is a diisocyanate, the ethylenically unsaturated monomer (b3) having a hydroxy group is 2-hydroxyethyl methacrylate, and the mixing ratio of (b1):(b2):(b3) is 1:1:1.

The reaction temperature is preferably from 40 to 120°C, more preferably from 50 to 120°C, particularly preferably from 70 to 90°C. Within such a range, the average number of hydroxy groups per molecule of the obtainable ethylenically unsaturated macromonomer (B) can be made to be within a preferred range, and consequently, the viscosity of the polymer polyol can easily be made to be within a proper range, and the dispersion stability will be good. It is particularly preferred that at the initial stage of the reaction, the reaction is carried out at a temperature of from 40 to 70°C, and after the reaction has advanced, it is carried out at a temperature of from 70 to 90°C, whereby the reaction of the obtainable ethylenically unsaturated macromonomer can easily be controlled, and the urethane-forming reaction proceeds.

Further, as the case requires, it is also possible to use a urethane-forming catalyst. As such a urethane-forming catalyst, an organic metal type or amine type catalyst may be used, and it is preferred to use an amine type catalyst.

After completion of the reaction, the obtained ethylenically unsaturated macromonomer (B) may be used as it is, as a starting material for a seed particle dispersion and a polymer polyol, but it is preferably subjected to reduced pressure treatment to remove an unreacted material, decomposed products, etc. and then used.

Further, after completion of the reaction of the polyol (b1), the isocyanate compound (b2) and the ethylenically unsaturated monomer (b3) having a hydroxy group, a compound having one group reactive with an isocyanate group, per molecule, such as a monoamine or monoalcohol, may be added in an amount of from 1 to 3 parts by mass per 100 parts by mass of the total amount of the polyol (b1), the isocyanate compound (b2) and the ethylenically unsaturated monomer (b3) having a hydroxy group, followed by mixing and reacting, whereby the obtainable seed particle dispersion (E) will be excellent in the storage stability, and as the finally obtainable polymer polyol, the viscosity will be lower, at the same polymer concentration.

<Seed particle dispersion (E)>

The seed particle dispersion (E) is a fine particulate polymer dispersion obtainable by polymerizing an ethylenically unsaturated monomer (M2) in the presence of the ethylenically unsaturated macromonomer (B), a solvent (C) and a chain transfer agent (D). That is, it is a fine particulate polymer dispersion wherein seed particles are dispersed.

The reaction temperature is preferably from 60 to 150°C, more preferably from 70 to 100°C, from the viewpoint of the storage stability of the obtainable polymer polyol.

(Solvent (C))

The solvent (C) may, for example, be an alcohol such as methanol, ethanol or isopropyl alcohol, a hydrocarbon

such as hexane, toluene or xylene, or an aliphatic ether represented by the formula $R^1OR^2$ (wherein each of $R^1$ and $R^2$ is a $C_{1-5}$ alkyl group). Among them, from such a viewpoint that control of the reactivity of the ethylenically unsaturated monomer is easy, an aliphatic ether is preferred, and particularly preferred is methyl-tert-butyl ether or ethyl-tert-butyl ether.

The amount of the solvent (C) to be used, is preferably from 20 to 90 mass%, more preferably from 30 to 80 mass%, particularly preferably from 40 to 70 mass%, in the total amount of the ethylenically unsaturated macromonomer (B), the ethylenically unsaturated monomer (M2) and the solvent (C).

(Chain transfer agent (D))

The chain transfer agent is preferably an alkylmercaptan. The alkylmercaptan may, for example, be dodecylmercaptan or mercaptoethnol. Particularly preferred is n-dodecylmercaptan.

The amount of the chain transfer agent (D) to be used, is preferably from 0.01 to 0.5 part by mass, particularly preferably from 0.1 to 0.3 part by mass, per 100 parts by mass of the total of the ethylenically unsaturated macromonomer (B), the solvent (C) and the ethylenically unsaturated monomer (M2).

(Ethylenically unsaturated monomer (M2))

As the ethylenically unsaturated monomer (M2), the same one as the above-described ethylenically unsaturated monomer (M1) may be used. Further, the ethylenically unsaturated monomer (M2) is preferably the same as the ethylenically unsaturated monomer (M1), whereby the compatibility between the obtainable seed particle dispersion and the ethylenically unsaturated monomer (M1) will be good. In a case where as the ethylenically unsaturated monomer (M1), two or more types are selected for use, it is preferred that also as the ethylenically unsaturated monomer (M2), the same two or more types as (M1) are used. In order to obtain the desired high concentration polymer polyol, a combined use of acrylonitrile and styrene is preferred. In such a case, the ratio (mass ratio) of acrylonitrile/styrene is preferably from 0/100 to 70/30, more preferably from 10/90 to 60/40, particularly preferably from 20/80 to 50/50. The ratio of acrylonitrile/styrene being at least 0/100 is preferred in that the compatibility of the obtainable seed particle dispersion with the ethylenically unsaturated monomer (M1) will be good, whereby the dispersion stability of polymer particles in the polymer polyol will increase. However, if the ratio exceeds 70/30, the viscosity tends to be extremely high and not practical in the method of the present invention, and therefore, the ratio is preferably at most 70/30. The amount of the ethylenically unsaturated monomer (M2) to be used, is not particularly limited, but since it gives an influence over the viscosity of the seed particle dispersion, the viscosity, average particle size and particle size distribution of the finally obtainable polymer polyol, the ethylenically unsaturated monomer (M2) is preferably from 3 to 40 mass%, particularly preferably from 5 to 20 mass%, in the total amount of the ethylenically unsaturated macromonomer (B), the solvent (C) and the ethylenically unsaturated monomer (M2).

(Polymerization initiator)

For polymerization of an ethyenically unsaturated monomer, a polymerization initiator of a type to initiate polymerization by forming free radicals, is usually employed. Specifically, it may, for example, be a peroxide such as hydrogen peroxide, benzoyl peroxide, diisopropylperoxy dicarbonate, acetyl peroxide, tert-butyl peroxide or di-tert-butyl peroxide, an azo compound such as 2,2-azobis-isobutyronitrile, 2,2-azobis-2-methylbutyronitrile or 2,2-azobis-2,4-dimethylvaleronitrile, or a persulfate. As the polymerization initiator, an azo compound is preferred, and 2,2-azobis-isobutyronitrile or 2,2-azobis-2-methylbutyronitrile is particularly preferred.

The amount of the polymerization initiator may be an amount to be commonly used for a free radical polymerization reaction, and it is preferably from 0.01 to 1 part by mass, particularly preferably from 0.1 to 0.3 part by mass, per 100 parts by mass of the total of the ethylenically unsaturated macromonomer (B), the ethylenically unsaturated monomer (M) and the solvent (C).

(Method for producing seed particle dispersion (E))

The seed particle dispersion (E) is produced by polymerizing the ethylenically unsaturated monomer (M2) in the presence of the ethylenically unsaturated macromonomer (B), the solvent (C) and the chain transfer agent (D). The amount of the ethylenically unsaturated macromonomer (B) to be used, is preferably from 10 to 50 mass%, particularly preferably from 20 to 30 mass%, in the total amount of the ethylenically unsaturated macromonomer (B), the ethylenically unsaturated monomer (M2) and the solvent (C).

The polymerization of the ethylenically unsubstituted monomer (M2) may be carried out in a semi-batch system or in a continuous system. The polymerization temperature is determined depending on the type of the polymerization

initiator, and it is preferably at least the decomposition temperature of the polymerization initiator, more preferably from 60 to 150°C. The polymerization temperature is particularly preferably from 70 to 100°C, in that the viscosity of the polymer polyol obtainable by using the seed particle dispersion (E) can thereby be made lower. Further, the polymerization reaction may be carried out in a pressurized system or in an ordinary pressure system. After completion of the polymerization, the obtained seed particle dispersion is used as it is, as a starting material for the desired polymer polyol.

<Method for producing polymer polyol>

The polymer polyol of the present invention is produced by polymerizing at least one type of ethylenically unsaturated monomer (M1) together with the seed particle dispersion (E), in the polyol (A).

The amount of the seed particle dispersion (E) to be used, is preferably from 1 to 20 mass%, particularly preferably from 3 to 15 mass%, in the total amount of the ethylenically unsaturated monomer (M1), the seed particle dispersion (E) and the polyol (A). When it is at least 1 mass%, it is possible to prevent bulk polymerization of the polymer polyol, and when it is at most 20 mass%, it is possible to finish the viscosity of the obtainable polymer polyol to be low.

The amount of the ethylenically unsaturated monomer (M1) to be used, is preferably from 20 to 65 mass%, particularly preferably from 40 to 60 mass%, in the total amount of the ethylenically unsaturated monomer (M1), the seed particle dispersion (E) and the polyol (A) in order to obtain a polymer polyol having a large content of the polymer component.

Available for the polymerization of the ethylenically unsaturated monomer (M1) are a semi-batch method wherein the polyol is charged into a reactor, and into this reactor, a mixture of the polyol, the ethylenically unsaturated monomer, the polymerization initiator, etc. is gradually fed with stirring to carry out the polymerization, and a continuous method wherein a mixture of the polyol, the ethylenically unsaturated monomer, the polymerization initiator, etc. is continuously fed into a reactor with stirring, and at the same time, the formed polymer-dispersed polyol composition is continuously discharged from the reactor. The present invention may be carried out by the batch system or the continuous system, but the continuous method is preferred to draw out the ability of the seed particle dispersion (E) as proposed by the present invention.

The polymerization temperature is determined depending on the type of the polymerization initiator, and it is preferably at least the decomposition temperature of the polymerization initiator, more preferably from 60 to 200°C, further preferably from 90 to 150°C. Further, the polymerization reaction may be carried out in a pressurized system or in an ordinary pressure system.

After completion of the polymerization reaction, an unreacted monomer and the solvent are usually removed by heating under reduced pressure.

The content of the polymer component in the polymer polyol of the present invention is preferably from 40 to 60 mass% in the polymer polyol. At the time of producing the polymer polyol, the total amount of the seed particle amount in the seed particle dispersion and the charged amount of the ethylenically unsaturated monomer (M2), is adjusted to be within the preferred range of the polymer component.

The polymer polyol may be produced in the presence of an antioxidant. Further, as the case requires, additives which are commonly added to polymer polyols, such as an ultraviolet absorber, a light stabilizer, a flame retardant, etc. may also be used. The antioxidant may be added after the production of the polymer polyol. The antioxidant may, for example, be a hindered phenol type antioxidant, a phosphorus type antioxidant, an sulfur type antioxidant or a hindered amine type antioxidant.

The hindered phenol type antioxidant may, for example, be triethylene glycol-bis[3-(3-t-butyl-5-methyl-4-hydroxyphenyl) propionate], pentaerythrityl-tetrakis[3-(3,5-di-t-butyl-4-hydroxyphenyl) propionate], octadecyl-3-(3,5-di-t-butyl-4-hydroxyphenyl) propionate], 1,6-hexamethylenebis[3-(3,5-di-t-butyl-4-hydroxyphenyl) propionate], 2,2-thio-diethylenebis[3-(3,5-di-t-butyl-4-hydroxyphenyl) propionate] or 2,6-di-t-butyl-4-methylphenol.

As such antioxidants, commercial products may be used. Specifically, hindered phenol type IRGANOX 245, IRGANOX 259, IRGANOX 1010, IRGANOX 1035 and IRGANOX 1076 manufactured by BASF Japan, may, for example, be mentioned.

The hindered amine type stabilizer may, for example, be 4,4'-dicumyldiphenylamine or 4,4'-octyldiphenylamine. As such antioxidants, commercial products may be used, and specifically, NONFLEX DCD and NONFLEX OD-R manufactured by Seiko Chemical Co., Ltd, may, for example, be mentioned.

The average particle size of the polymer component of the present invention is measured by a laser diffraction/scattering particle size distribution measuring apparatus [Model No.: Microtrack FRA-9220, manufactured by Nikkiso Co., Ltd.]. The average particle size of the polymer component of the present invention is preferably at most 1.5 μm. When the average particle size of the polymer component is within this range, the dispersion stability of the polymer polyol is better than a case where the particle size is larger. In order to bring the average particle size of the polymer component to be within this range, at the time of producing the polymer polyol, adjustment is made by the polymerization temperature, the amount of the polymerization initiator to be used and the amount of the seed particle dispersion.

The present invention further provides a polyurethane foam obtainable by reacting a polyol composition containing the above-described polymer polyol and a polyisocyanate compound.

<Method for producing polyurethane foam of the present invention>

In the method for producing a polyurethane foam of the present invention, a polyol component containing the polymer polyol of the present invention, a high molecular weight active hydrogen compound as the case requires, and an isocyanate component (hereinafter referred to also as a polyisocyanate compound) are reacted in the presence of a blowing agent, an urethane-forming catalyst, a foam stabilizer and other adjuvants as the case requires.

(Polyol component)

The polyol component contains the polymer polyol of the present invention, the following polyether polyol (A1), the following polyether polyol (A2) and the following another polyol (A3).

<Polymer polyol>

The polymer polyol of the present invention to be used as a starting material for the polyurethane foam has a hydroxy value of preferably from 4 to 51 mgKOH/g, more preferably from 5 to 45 mgKOH/g, particularly preferably from 11 to 45 mgKOH/g. The hydroxy value of the polymer polyol is obtained in accordance with JIS K1557-1 (2007).

The average number of hydroxy groups in the polymer polyol is an average number of hydroxy groups in the polyol (A) to be used for the production of the polymer polyol and is preferably from 2 to 8. It is particularly preferably from 2 to 4 from the viewpoint of the mechanical strength and viscosity of the obtainable polyurethane foam.

For the polymer polyol of the present invention to be used as a starting material for the polyurethane foam, the polyol (b1) to be used for the production of the above-mentioned ethylenically unsaturated macromonomer (B) is preferably a polyoxyalkylene diol wherein a bifunctional polyhydric alcohol is used as the initiator, and oxypropylene groups and oxyethylene groups are present randomly or in blocks (blocked portions may be randomly present). Particularly preferred is a polyoxyalkylene diol wherein a bifunctional polyhydric alcohol is used as the initiator, oxypropylene groups and oxyethylene groups are present in blocks (blocked portions may be randomly present), and at its terminals, blocks of oxyethylene groups are present. The terminal oxyethylene groups are preferably from 10 to less than 30 mass%.

The polymer polyol of the present invention in the polyol component is preferably from 1 to 70 mass%, more preferably from 2 to 60 mass%, particularly preferably from 5 to 50 mass%. When it is at least 1 mass%, the hardness and mechanical strength will be good, and when it is at most 70 mass%, the mechanical strength and viscosity will be good.

<Polyether polyol (A1)>

The polyether polyol (A1) (hereinafter sometimes referred to simply as the polyol (A1)) is a polyether polyol obtainable by ring-opening addition polymerization, by means of an alkali metal hydroxide as a polymerization catalyst, of a predetermined amount of ethylene oxide to an intermediate polyol obtained via a step of ring-opening addition polymerization of an alkylene oxide to an initiator in the presence of a double metal cyanide complex catalyst (sometimes referred to also as a DMC catalyst in this specification). The polyol (A1) has at least two hydroxy groups per molecule.

[Double metal cyanide complex catalyst (DMC catalyst)]

As the DMC catalyst in the present invention, a known catalyst may be used. A typical one is represented by the following formula (I).

$$M^1_a[M^2_b(CN)_c]_de(M^3_fX_g)h(H_2O)i(L) \quad (I)$$

In the formula (I), each of $M^1$ to $M^3$ is a metal atom, X is a halogen atom, L is an organic ligand, and each of a, b, c, d, e, f, g, h and i is a number changeable by e.g. the valency of the metal atom or the coordination number of the organic ligand.

In the formula, $M^1$ or $M^3$ is a metal selected from the group consisting of Zn(II), Fe(II), Fe(III), Co(II), Ni(II), Mo (IV), Mo(VI), Al(III), V(V), Sr(II), W(IV), W(VI), Mn(II), Cr(III), Cu(II), Sn(II) and Pb(II), and is preferably Zn(II) or Fe(II). The Roman numeral in brackets following the atomic symbol of a metal represents the valency, and the same applies hereinafter. $M^1$ and $M^3$ in one molecule may be the same or different from each other, and are preferably the same.

$M^2$ is a metal selected from the group consisting of Fe(II), Fe(III), Co(II), Co(III), Cr (II), Cr(III), Mn(II), Mn(III), Ni(II), V(IV) and V(VI), and is preferably Co(III) or Fe(III).

X is a halogen atom.

L is an organic ligand. As such an organic ligand, an alcohol, an ether, a ketone, an ester, an amine or an amide may, for example, be used, and an alcohol is preferred. A preferred organic ligand is a water-soluble one, and as a specific example, one or more compounds selected from the group consisting of tert-butyl alcohol, n-butyl alcohol, iso-butyl alcohol, tert-pentyl alcohol, iso-pentyl alcohol, N,N-dimethylacetamide, ethylene glycol dimethyl ether (also called diglyme), triethylene glycol dimethyl ether (also called triglyme), ethylene glycol mono-tert-butyl ether, iso-propyl alcohol and dioxane, may be mentioned. The dioxane may be 1,4-dioxane or 1,3-dioxane, but is preferably 1,4-dioxane.
A more preferred organic ligand is tert-butyl alcohol, tert-pentyl alcohol, ethylene glycol mono-tert-butyl ether or a combination of tert-butyl alcohol and ethylene glycol mono-tert-butyl ether. When such an organic ligand is used, a higher polymerization activity may be obtained, and such is preferred in order to narrow the molecular weight distribution of the polyol (A1).
As the DMC catalyst in the present invention, from the viewpoint of the catalytic activity, preferred is one wherein the organic ligand is tert-butyl alcohol or ethylene glycol mono-tert-butyl ether, particularly preferably tert-butyl alcohol.
In the formula (I), preferred is one wherein $M^1$ and $M^3$ are the same and Z(II) or Fe(II), $M^2$ is Co(III) or Fe(III), X is halogen, and L is tert-butyl alcohol or ethylene glycol mono-tert-butyl ether, and particularly preferred is one wherein each of $M^1$ and $M^3$ is Z(II), $M^2$ is Co(III), X is potassium, and L is tert-butyl alcohol.
The method for producing the DMC catalyst is not particularly limited, and a known method may suitably be used. For example, there may be mentioned (i) a method wherein an organic ligand is coordinated to a reaction product obtainable by reacting a halogenated metal salt and cyanometalic acid and/or an alkali metal cyanometalate in an aqueous solution, then the formed solid component is separated, and the separated solid component is further washed with an organic ligand aqueous solution, or (ii) a method wherein in an organic ligand aqueous solution, a halogenated metal salt and cyanometalic acid and/or an alkali metal cyanometalate are reacted, the obtainable reaction product (solid component) is separated, the separated solid component is further washed with an organic ligand aqueous solution, to obtain a cake (solid component), and the obtained cake is separated by filtration and further dried.
The metal constituting the cyanometalate of the above alkali metal cyanometalate to be used as a starting material for the production of the DMC catalyst of the present invention, corresponds to $M^2$ in the above formula (I).
The cyanometalic acid or alkali metal cyanometalate to be used as a starting material for the production of the DMC catalyst of the present invention, is preferably $H_3[Co(CN)_6]$, $Na_3[Co(CN)_6]$ or $K_3[Co(CN)_6]$, particularly preferably $Na_3[Co(CN)_6]$ or $K_3[Co(CN)_6]$.
Further, in the above method for producing the DMC catalyst, at the stage before separating the cake by filtration, a polyether polyol may be mixed to the liquid having the solid component dispersed in the organic ligand aqueous solution, and from the obtained mixture, water and an excess organic ligand may be distilled off, to prepare a slurry-form DMC catalyst mixture (hereinafter referred to also as a "slurry-form DMC catalyst") having the DMC catalyst dispersed in the polyether polyol.
The polyether polyol to be used for the preparation of the above slurry-form DMC catalyst, may be produced by ring-opening addition polymerization of an alkylene oxide to at least one type of initiator selected from polyhydric alcohols by using an anionic polymerization catalyst or a cationic polymerization catalyst. The polyether polyol to be used for this purpose, is preferably one having from 2 to 8 hydroxy groups and a number average molecular weight (Mn) of from 300 to 5,000, whereby the polymerization activity of the DMC catalyst will be high, and the viscosity of the slurry-form DMC catalyst will not be high and the handling will be easy.
The amount of the DMC catalyst to be used in the method for producing the polyol (A1) is set to be at least the amount required to obtain the desired molecular weight of the polyol (A1) to be obtained.
The DMC catalyst and metal compounds derived from the DMC catalyst remaining in the obtainable polyol (A1) should better be less. When they are less, the reaction rate of the polyol (A1) and the polyisocyanate compound, or the influence of the remaining DMC catalyst over the physical properties of a polyurethane foam produced by using the polyol (A1) can be reduced.
In the present invention, after the ring-opening addition polymerization of an alkylene oxide to the initiator, an operation to remove the DMC catalyst from the obtained intermediate polyol or polyol (A1) may be carried out. However, in a case where the amount of the DMC catalyst remaining in the intermediate polyol or polyol (A1) is less and will not present an adverse effect to the reaction of the polyol (A1) and the polyisocyanate compound, or to the physical properties of the final product, it is possible to proceed to the next step without being required to remove the DMC catalyst, whereby the efficiency for production of the polyol (A1) can be increased.
Specifically, the total amount of metals (such as Zn, Co, etc.) derived from the DMC catalyst, contained in the polyol (A1) at the completion of the polymerization reaction, is preferably from 1 to 30 ppm, more preferably an amount of at most 10 ppm. When the total amount of metals derived from the DMC catalyst is at most 30 ppm, it tends to be not required to remove the remaining catalyst from the obtained polyol (A1).
Further, as the case requires, treatment for removal of the DMC catalyst, or treatment for deactivation of the DMC catalyst, may be applied to the obtained intermediate polyol or polyol (A1). As such a method, it is possible to employ, for example, an adsorption method of using an adsorbent selected from a synthetic silicate (such as magnesium

silicate or aluminum silicate), an ion exchange resin, activated white earth, etc., a neutralization method by means of an amine, an alkali metal hydroxide, an organic acid or a mineral acid, or a method of using the neutralization method and the adsorption method in combination.

[Initiator]

The initiator to be used for the production of the polyol (A1) is a compound having at least two hydroxy groups per molecule. A preferred number of hydroxy groups in the initiator is from 2 to 12, more preferably from 2 to 8, particularly preferably from 2 to 6. When an initiator having at most 12 hydroxy groups is employed, the molecular weight distribution of the obtainable polyol (A1) tends to be narrow. In a case where two or more compounds are used in combination as the initiator, the average number of hydroxy groups per one molecule is preferably within the above range.

A specific example of the initiator may, for example, be water; a dihydric alcohol such as ethylene glycol, diethylene glycol, propylene glycol, dipropylene glycol, 1,3-propane diol, 1,4-cyclohexane diol, 1,3-butane diol, 1,4-butane diol, 1,6-hexane diol or 1,4-cyclohexane diol; a tri- or higher-hydric alcohol such as glycerin, diglycerin, trimethylol propane, pentaerythritol, dipentaerythritol or tripentaerythritol; a saccharide such as glucose, sorbitol, dextrose, fructose, sucrose or methyl glucoside, or its derivatives; or a phenol such as bisphenol A, bisphenol F, bisphenol S, novolac, resol or resorcin. One of these compounds may be used alone, or two or more of them may be used in combination.

Further, also a compound selected from a polyether polyol and a polyoxytetramethylene glycol, obtainable by polymerizing an alkylene oxide to such a compound, may be used as the initiator. Such a compound preferably has a number average molecular weight (Mn) of from 300 to 20,000 and from 2 to 12 hydroxy groups per molecule. Further, the hydroxy value of such a compound is preferably at most 187 mgKOH/g.

The number average molecular weight (Mn) of the initiator is preferably from 18 to 20,000, more preferably from 300 to 10,000, particularly preferably from 600 to 5,000. When an initiator having a number average molecular weight (Mn) of at least 300 is used, it is possible to particularly shorten the time until the ring-opening addition polymerization starts in the presence of the DMC catalyst.

On the other hand, when the number average molecular weight (Mn) of the initiator is at most 20,000, the viscosity of the initiator will not be too high, and the ring-opening addition polymerization reaction tends to be uniform.

Here, in a case where the initiator is composed solely of molecules of the same molecular weight such as a low molecular weight alcohol, the molecular weight obtainable from the chemical formula is taken as the number average molecular weight (Mn) of the initiator.

The hydroxy value of the initiator is preferably at most 6,300 mgKOH/g, more preferably at most 300 mgKOH/g, particularly preferably at most 187 mgKOH/g.

[Alkylene oxide]

The alkylene oxide to be subjected to ring-opening addition polymerization to an initiator at the time of producing an intermediate polyol, is preferably a $C_{2-20}$ alkylene oxide. As a specific example, ethylene oxide, propylene oxide, 1,2-butylene oxide, 2,3-butylene oxide, styrene oxide, oxetane, cyclopentane oxide, cyclohexene oxide or a $C_{520}$ $\alpha$-olefin oxide may, for example, be mentioned. As the alkylene oxide, one type may be used alone, or two or more types may be used in combination.

Among them, ethylene oxide, propylene oxide, 1,2-butylene oxide or 2,3-butylene oxide is preferred, and ethylene oxide or propylene oxide is more preferred. It is particularly preferred to use propylene oxide alone, or both propylene oxide and ethylene oxide in combination. In a case where two or more types of alkylene oxides are used in combination, the ring-opening polymerization of the alkylene oxides to the initiator may be random polymerization, block polymerization, or a combination of random polymerization and block polymerization.

[Addition polymerization solvent]

In the addition polymerization step for subjecting the alkylene oxide to ring-opening addition polymerization, a solvent (addition polymerization solvent) may be used which presents no adverse effect to the ring-opening addition polymerization. As such an addition polymerization solvent, hexane, cyclohexane, benzene or ethyl methyl ketone may be mentioned. In a case where no addition polymerization solvent is used, a step of removing a solvent from the product is not required, whereby the productivity can be increased. Further, due to an influence of water content or an antioxidant contained in the addition polymerization solvent, the catalytic activity of the DMC catalyst may sometimes be deteriorated, and such a trouble can be avoided by not using the addition polymerization solvent.

[Production of intermediate polyol]

The step of carrying out the ring-opening addition polymerization of the alkylene oxide to the initiator in the presence of the DMC catalyst, may be conducted by a known method.
A preferred method for producing the intermediate polyol is a method which comprises an initial activation step (a) of supplying and reacting a small amount of an alkylene oxide (hereinafter sometimes referred to also as the initial activation monomer) to a reaction liquid containing the initiator and the DMC catalyst, and an additional polymerization step (b) of additionally supplying an alkylene oxide after the initial activation step (a) to carry out the ring-opening addition polymerization in the presence of the DMC catalyst.
The alkylene oxide (the initial activation monomer) to be supplied in the initial activation step (a) is a part of the alkylene oxide to be subjected to ring-opening addition polymerization to the initiator in the production of the polyol (A1).
This method is preferably carried out in a batch system. Specifically it may be carried out as follows.

(a) Initial activation step

Firstly, into a pressure resistant reactor equipped with a stirring means and a temperature-adjusting means, the entire amount of the initiator and the entire amount of the DMC catalyst were put and mixed to prepare a reaction liquid. Usually the initiator is a viscous liquid, and the DMC catalyst is in the form of particles or in the form of a slurry containing such particles. The reaction liquid may contain an addition polymerization solvent as the case requires. Further, the reaction liquid may contain components added as the case requires in the step of producing the DMC catalyst.
Here, the term "mixed" for the initiator and the DMC catalyst means a state where both are uniformly mixed as a whole, and in the initial activation step (a) (hereinafter referred to also as "the step (a)"), both are required to be in such a "mixed" state.
The mixing means in the step (a) is not particularly limited so long as it is a means capable of sufficiently mixing the DMC catalyst and the initiator (including components to be added as the case requires). As the mixing means, usually a stirring means is employed.
Then, preferably the interior of the pressure resistant reactor is flushed with nitrogen. Oxygen in the reaction liquid is thereby removed. The amount of oxygen in the reaction liquid is preferably at most 1 mass% to the amount of nitrogen.
Deaeration from the interior of the pressure resistant reactor is preferably carried out when required in the process e.g. in a case where the water content of the initiator is too much.
Then, the reaction liquid is heated with stirring to raise the temperature, and then, in a state where the temperature of the reaction liquid is at a predetermined initial temperature, an initial activation monomer is supplied and reacted (initial activation step). The initial temperature in this specification means a temperature of the reaction liquid immediately before initiation of the supply of the initial activation monomer.
The initial temperature of the reaction liquid is set to be from 120 to 165°C, preferably from 125 to 150°C, particularly preferably from 130 to 140°C. When it is at least 120°C, the catalytic activity becomes distinctly good, and when the initial temperature is at most 165°C, there will be no thermal decomposition of components contained in the reaction liquid.
Specifically, it is preferred that the reaction liquid is heated to the initial temperature with stirring, and in a state where the temperature of the reaction liquid is maintained, the supply of the initial activation monomer is initiated. For example, when the reaction liquid has reached the predetermined initial temperature, heating is stopped, and the supply of the initial activation monomer is initiated before the temperature of the reaction liquid begins to decrease. The time from the stopping of heating to the initiation of the supply of the initial activation monomer is not particularly limited, but from the viewpoint of efficiency, it is preferably within one hour.
The amount of the initial activation monomer to be supplied, is from 5 to 20 parts by mass, preferably from 8 to 15 parts by mass, particularly preferably from 10 to 12 parts by mass, per 100 parts by mass of the initiator contained in the reaction liquid. When it is at least the lower limit value of the above range, the initial activation tends to readily take pace, and when it is at most the upper limit value, a runaway reaction can easily be prevented.
The supply of the initial activation monomer is carried out in a state where the pressure resistant reactor is sealed. When the initial activation monomer is supplied to the reaction liquid, immediately thereafter, the internal pressure of the pressure resistant reactor increases along with vaporization of an unreacted initial activation monomer. Then, when the DMC catalyst is initially activated, a reaction of the initial activation monomer and the initiator takes place, and at the same time as the internal pressure of the pressure resistant reactor begins to decrease, the temperature of the reaction liquid is raised by the heat of reaction. When the entire amount of the supplied initial activation monomer has been completely reacted, the internal pressure of the pressure resistant reactor decreases to the same level as before the supply, and the temperature rise of the reaction liquid due to the heat of reaction ceases.
In this specification, the initial activation step is meant for a step from initiation of the supply of the initial activation

monomer to completion of the reaction of the initial activation monomer. The completion of the reaction of the initial activation monomer can be confirmed by the decrease in the internal pressure of the pressure resistant reactor. That is, the completion of the initial activation step is meant for the time when the internal pressure of the pressure resistant reactor has decreased to the same level as before the supply of the initial activation monomer.

The reaction time in the initial activation step, i.e. the time from initiation of the supply of the initial activation monomer to completion of the reaction of the initial activation monomer, is not particularly limited, but usually from 10 to 60 minutes.

In the step (a), the maximum temperature of the reaction temperature is set to be higher by from 15 to 50°C than the initial temperature of the reaction liquid. The maximum temperature is more preferably higher by at least 20°C, particularly preferably higher by at least 25°C than the initial temperature. The amount of heat generation by the reaction of the initial activation monomer and the initiator is substantial, whereby usually the temperature of the reaction liquid increases to the maximum temperature higher by at least 15°C than the initial temperature even without heating, and thereafter the temperature gradually decreases even without cooling. The larger the amount of the initial activation monomer, the higher the temperature rise of the reaction liquid by the heat of reaction. Cooling of the reaction liquid may be carried out as the case requires, e.g. when the temperature has risen too much. When the temperature has reached the maximum temperature, it is preferred to cool the reaction liquid in order to shorten the time for the temperature decrease.

The cooling may be carried out, for example, by a method for heat exchange by providing in the reaction liquid a cooling pipe in which a cooling medium flows. In such a case, the temperature of the reaction liquid can be controlled by the temperature of the cooling medium, the flowing rate of the cooling medium and the flow timing of the cooling medium.

When the difference between the maximum temperature and the initial temperature of the reaction liquid is at least the lower limit value in the above range, a polyol (A1) having a narrow molecular weight distribution tends to be readily obtainable. If the maximum temperature of the reaction liquid becomes high beyond 50°C in difference from the initial temperature, such is undesirable for the pressure resistant structure of the reactor.

The value for the maximum temperature is preferably within a range of from 135 to 180°C, more preferably within a range of from 145 to 180°C, particularly preferably within a range of from 150 to 180°C.

In the step (a), the temperature of the reaction liquid is maintained to be preferably within a temperature range of at least the initial temperature, more preferably within a temperature range higher by at least 15°C than the initial temperature, after the temperature of the reaction liquid has increased along with the reaction between the initial activation monomer and the initiator, to the maximum temperature, until completion of the reaction of the initial activation monomer.

(b) Additional polymerization step

After the initial activation step, the rest of the alkylene oxide is additionally supplied and at the same time, the temperature of the reaction liquid is adjusted to the predetermined polymerization temperature, to carry out the polymerization reaction with stirring thereby to obtain an intermediate polyol (additional polymerization step, hereinafter referred to also as "the step (b)").

In the step (b), if the alkylene oxide to be additionally supplied is of one type, block chains will be formed, and if it is a mixture of two or more alkylene oxides, random copolymer chains will be formed.

As the heat resistant reactor to be used in the step (b), it is preferred to employ a pressure resistant autoclave. However, in a case where the boiling point of the alkylene oxide to be additionally supplied is high, the reactor is not required to be highly pressure resistant. The material for the reactor is not particularly limited. Further, as the reactor, one used in the above step (a) may be used as it is.

The ring-opening addition polymerization reaction in the step (b) is preferably carried out by a batch method. Otherwise, it may be carried out by a continuous method wherein supplying the reaction liquid (the mixture containing the DMC catalyst and the initiator) after completion of the above step (a) and the alkylene oxide and discharging the polyol (A1) as the product, are carried out simultaneously. Especially in a case where the average molecular weight per hydroxy group, of the initiator, is at most 300, a continuous method is preferred.

Immediately after the additional supply of the alkylene oxide, the internal pressure of the pressure resistant reactor increases along with vaporization of an unreacted alkylene oxide. Then, a reaction of the alkylene oxide and the initiator takes place, and the internal pressure of the pressure resistant reactor begins to decrease and at the same time, the heat of reaction occurs. After completion of the reaction of the entire amount of the additionally supplied alkylene oxide, the internal pressure of the pressure resistant reactor decreases to the same level as before the additional supply.

The completion of the reaction of the additionally supplied alkylene oxide can be confirmed by the decrease in the internal pressure of the pressure resistant reactor.

The temperature (polymerization temperature) of the reaction liquid at the time of reacting the additionally supplied alkylene oxide is preferably within a range of from 125 to 180°C, more preferably within a range of from 125 to 160°C. When the polymerization temperature is at least the lower limit value of the above range, a good reaction rate

can readily be obtainable, and the amount of an unreacted substance remaining in the final product can be made low. On the other hand, when the polymerization temperature is at most the upper limit value of the above range, the high activity of the DMC catalyst can be maintained well, whereby the molecular weight distribution tends to be narrow.

After completion of the reaction of the additionally supplied alkylene oxide, it is preferred to cool the reaction liquid and carry out purification of the reaction product.

As the case requires, treatment for removal of the DMC catalyst from the obtained intermediate polyol, or treatment for deactivation of the DMC catalyst, may be carried out. As such a method, it is possible to employ, for example, an adsorption method of using an adsorbent selected from a synthetic silicate (such as magnesium silicate or aluminum silicate), an ion exchange resin, activated white earth, etc., a neutralization method by means of an amine, an alkali metal hydroxide, an organic acid such as phosphoric acid, lactic acid, succinic acid, adipic acid or acetic acid, or a salt thereof, or an inorganic acid such as sulfuric acid, nitric acid or hydrochloric acid, or a salt thereof, or a method of using the neutralization method and the adsorption method in combination.

Such treatment for removal of the DMC catalyst or treatment for deactivation of the DMC catalyst may be carried out after producing the polyol (A1).

[Alkali metal hydroxide catalyst]

To the obtained intermediate polyol, a predetermined amount of ethylene oxide is polymerized by ring-opening addition polymerization by means of an alkali metal hydroxide as the polymerization catalyst.

The alkali metal hydroxide may, for example, be sodium hydroxide (NaOH), potassium hydroxide (KOH) or cesium hydroxide (CsOH). Among them, sodium hydroxide or potassium hydroxide is preferred since it is inexpensive.

The alkali metal hydroxide as the polymerization catalyst may be used in the form of an alcoholate. A preferred example of an alkali metal alcoholate compound may, for example, be sodium methoxide ($CH_3ONa$), potassium methoxide ($CH_3OK$), sodium ethoxide ($C_2H_5ONa$) or potassium ethoxide ($C_2H_5OK$).

[Step of ring-opening addition polymerization of ethylene oxide]

Specifically, to the reaction liquid wherein the intermediate polyol is formed, the alkali metal hydroxide is added as a polymerization catalyst, and ethylene oxide is further added to carry out the ring-opening addition polymerization, whereby a polyether polyol (A1) having a so-called straight cap structure is obtainable, wherein block chains made of oxyethylene groups (referred to also as terminal oxyethylene groups in this specification) are added to the terminals of the intermediate polymer.

The amount of the alkali metal hydroxide to be used as the polymerization catalyst is preferably as small as possible. For example, the amount is preferably at a level of 3,000 ppm to the final amount of the polyol (A1) to be obtained.

The temperature for the ring-opening addition polymerization of ethylene oxide in this step is preferably from 30 to 160°C, more preferably from 50 to 150°C, particularly preferably from 60 to 150°C. The ring-opening addition polymerization reaction of ethylene oxide is preferably carried out with stirring. Further, the above-mentioned addition polymerization solvent may be employed.

To the polyol (A1) thus obtained, a stabilizer may be added as the case requires in order to prevent deterioration during its storage for a long period of time. The stabilizer may, for example, be a hindered phenol type antioxidant such as BHT (dibutylhydroxytoluene).

By using the DMC catalyst as a polymerization catalyst for ring-opening addition polymerization of an alkylene oxide at the time of producing the intermediate polyol, it is possible to prevent formation of a monool having an unsaturated bond as a byproduct, whereby the unsaturation degree of the polyol (A1) will be low. When a polyurethane foam is produced by using a polyol having a low unsaturation degree, the physical properties of the polyurethane foam tend to be improved as compared with a case where a polyol having a high unsaturation degree is used.

The unsaturation degree of the polyol (A1) is preferably at most 0.030 meq/g, more preferably at most 0.02 meq/g.

By carrying out the initial activation step (a) at the above-mentioned temperature at the time of producing the intermediate polyol, it is possible to make the molecular weight distribution (Mw/Mn) of the obtainable polyol (A1) narrower. The polyol (A1) is thereby made to have a low viscosity, whereby the handling efficiency will be improved.

Especially in the case of a polyol (A1) having a small hydroxy value and a high molecular weight, as the molecular weight distribution becomes broad, the content of high molecular polyol having a number average molecular weight of at least 100,000 increases, whereby the viscosity of the polyol remarkably increases, and therefore, the effect to lower the viscosity by making the molecular weight distribution narrower is particularly valuable.

The reason as to why a polyol (A1) having such a narrow molecular weight distribution can be obtained, is not clearly understood, but is considered to be as follows.

The DMC catalyst may be obtained only as aggregates having no catalytic activity at the time of the production of the catalyst. Therefore, by carrying out the initial activation step in the ring-opening addition polymerization using the

DMC catalyst, the aggregates are disintegrated, whereby the surface area of the DMC catalyst increases to exhibit the catalytic activity. At that time, by carrying out the initial activation step by using the initiator, the DMC catalyst and a part of the alkylene oxide under such a condition that the temperature reaches the maximum temperature higher than the initial temperature, disintegration of the DMC catalyst is made efficient, and the catalytic activity is further improved. And, the high activity of the DMC catalyst is maintained until completion of the ring-opening addition polymerization reaction of the alkylene oxide additionally supplied in the step (b), whereby a polymer having a uniform molecular weight is considered to be formed in a large amount.

The average number of hydroxy groups in the polyol (A1) is from 2 to 8, preferably from 2.5 to 4.5, particularly preferably from 2.5 to 4.0. When the average number of hydroxy groups is at least the lower limit value of the above range, the polyurethane foam to be produced by using such polyol (A1) tends to have good hardness. When it is at most the upper limit value of the above range, the polyurethane foam to be produced by using such polyol (A1) tends to have good durability.

The hydroxy value of the polyol (A1) is from 5 to 45 mgKOH/g, preferably from 5 to 35 mgKOH/g, particularly preferably from 5 to 24 mgKOH/g. When the hydroxy value is within the above range, the polyurethane foam to be produced by using such polyol (A1) tends to have good mechanical properties.

<Polyol (A2)>

The polyol (A2) in the present invention is a polyol other than the above polyol (A1) and may be one type of polyol, or may be a mixture of two or more types of polyols.

The polyol (A2) is preferably a polyether polyol, more preferably a polyether polyol obtainable by ring-opening addition of an alkylene oxide to an initiator.

The alkylene oxide to be used for the production of the polyol (A2) may, for example, be ethylene oxide, propylene oxide, 1,2-epoxybutane or 2,3-epoxybutane. Among them, propylene oxide or a combined use of propylene oxide and ethylene oxide, is preferred.

As the polyol (A2), it is preferred to use a polyoxy polyol obtainable by ring-opening addition polymerization of propylene oxide to the initiator, followed by ring-opening addition polymerization of ethylene oxide, since the durability at the time of heating will be improved.

As the initiator to be used for the production of the polyol (A2), a compound having from 2 to 6 active hydrogen atoms per molecule may be used alone, or two or more of such compounds may be used in combination. A specific example of the compound having from 2 to 6 active hydrogen atoms may, for example, be a polyhydric alcohol such as ethylene glycol, propylene glycol, 1,4-butane diol, diethylene glycol, dipropylene glycol, glycerin, trimethylol propane, pentaerythritol or sorbitol; a polyhydric phenol such as bisphenol A; or an amine such as monoethanolamine, diethanolamine, triethanolamine or piperazine. Among them, a polyhydric alcohol is particularly preferred. Further, it is preferred to use a high hydroxy value polyether polyol obtained by ring-opening addition polymerization of an alkylene oxide, preferably propylene oxide, to such a compound.

The average number of hydroxy groups in the polyol (A2) in the present invention is from 2 to 6. By adjusting the average number of hydroxy groups to be from 2 to 6, it is possible to avoid a trouble such that the physical property such as the dry thermal compression set of the obtainable polyurethane foam substantially deteriorates, and it is also possible to avoid a trouble such that the elongation of the obtainable polyurethane foam decreases, or the physical property such as the tensile strength decreases.

The average number of hydroxy groups in the polyol (A2) is preferably from 2.0 to 5.7, more preferably from 2.0 to 5.0. By adjusting the average number of hydroxy groups to be within such a range, it is possible to obtain an urethane foam excellent in the dry thermal compression set, etc.

The hydroxy value of the polyol (A2) in the present invention is from 15 to 50 mgKOH/g. By adjusting the hydroxy value to be at least 15 mgKOH/g, it is possible to prevent collapse, etc. and to produce a polyurethane foam stably. Further, by adjusting the hydroxy value to be at most 50 mgKOH/g, it is possible to avoid impairing the flexibility of the polyurethane foam to be produced and to suppress the dry thermal compression set to be low.

In the present invention, the mixing ratio of the polyol (A1) to the polyol (A2) i.e. (A1):(A2) is from 0:100 to 100:0.

The average number of hydroxy groups in the polyol (A2) is preferably from 2 to 8, more preferably from 2 to 6. When the average number of hydroxy groups is at least the lower limit value of such a range, good durability and ride quality of the polyurethane foam tend to be readily obtainable. When it is at most the upper limit value of such a range, good mechanical properties of the polyurethane foam tend to be readily obtainable.

The hydroxy value of the polyol (A2) is preferably from 20 to 160 mgKOH/g, more preferably from 22 to 60 mgKOH/g. When the hydroxy value is at least the lower limit value of the above range, the viscosity tends to be low, and good operation efficiency tends to be readily obtainable. When it is at most the upper limit value of the above range, good mechanical properties of the polyurethane foam tend to be readily obtainable.

The number average molecular weight (Mn) of the polyol (A2) is preferably from 700 to 22,000, more preferably

from 1,500 to 20,000, particularly preferably from 2,000 to 15,000.

The content of the polyol (A2) in the polyol component is preferably at most 100 mass%, more preferably at most 98 mass%, further preferably at most 90 mass%, particularly preferably at most 80 mass%.

<Another polyol (3)>

The polyol component may contain another polyol (A3) not belonging to the polymer polyol, the polyol (A1) or the polyol (A2) within a range not to impair the effects of the present invention.

Another polyol (A3) may, for example, be a polyether polyol, a polyester polyol or a polycarbonate polyol not belonging to the polymer polyol, the polyol (A1) or the polyol (A2). However, one which is included in the after-described cross-linking agent (hereinafter referred to also as the cross-linking agent (G)) or cell opener (hereinafter referred to also as the cell opener (F)) shall not be included in another polyol (A3).

As another polyol (A3), a known product may be used. Another polyol (A3) may, for example, be a polyether polyol obtainable by ring-opening addition polymerization of an alkylene oxide to an initiator by means of an alkali metal hydroxide as a polymerization catalyst. As another polyol (A3), one type may be used alone, or two or more types may be used in combination.

<High molecular weight active hydrogen compound>

As a compound to be reacted with the polyisocyanate compound (b2), a compound having active hydrogen, not belonging to the polymer polyol, the polyol (A1), the polyol (A2) and the polyol (A3), may be contained in addition to the polyol component. However, one which is included in the after-described cross-linking agent (G) or cell opener (F) shall not be included in this high molecular weight active hydrogen compound.

The high molecular weight active hydrogen compound is, when it has a hydroxy group, a compound not belonging to the polymer polyol, the polyol (A1), the polyol (A2) and the polyol (A3) and may, for example, be a high molecular weight polyamine having at least two primary or secondary amino groups; a high molecular weight compound having at least one primary or secondary amino group and at least one hydroxy group; or a piperazine type polyol.

The molecular weight per functional group, of the high molecular weight active hydrogen compound, is preferably at least 400, more preferably at least 800. The upper limit for the molecular weight per functional group is preferably 5,000.

The average number of functional groups in the high molecular weight active hydrogen compound is preferably from 2 to 8.

The proportion of the high molecular weight active hydrogen compound is preferably at most 20 mass% in the total (100 mass%) of the polyol (A2) and the high molecular weight active hydrogen compound. When the proportion of the high molecular weight active hydrogen compound is at most 20 mass%, the reactivity with the polyisocyanate compound will not be too high, and the moldability, etc. of the polyurethane foam will be good.

<Polyisocyanate compound>

The polyisocyanate compound may, for example, be an aromatic polyisocyanate compound having at least two isocyanate groups or a mixture of at least two types of such compounds, or a modified polyisocyanate obtainable by modifying it. Among them, specifically, the polyisocyanate to be used at the time of the production of a polyurethane foam is preferably at least one member selected from the group consisting of tolylene diisocyanate (TDI), diphenylmethane diisocyanate (MDI), polymethylenepolyphenyl isocyanate (commonly called polymeric MDI) and modified products thereof. The modified products may, for example, be a prepolymer type modified product, a nulate modified product, a urea modified product, a carbodiimide modified product, etc. One of such polyisocyanate compounds may be used alone, or two or more of them may be used in combination as a mixture.

Among them, the polyisocyanate compound preferably contains TDI or MDI. From such a viewpoint that the obtainable polyurethane can be made light in weight, it preferably contains at least TDI, and a mixture of TDI and MDI is preferred. The mixing ratio (mass ratio) of TDI to MDI, i.e. TDI/MDI, is, for example, from 100/0 to 0/100, preferably from 100/0 to 10/90, more preferably from 90/10 to 50/50.

The polyisocyanate compound to be used at the time of the production of the polyurethane foam, may be a prepolymer. Such a prepolymer may be a prepolymer of TDI, MDI or crude MDI with a polyol derived from natural fat, a polyether polyol obtained by ring-opening addition polymerization of an alkylene oxide to a polyol derived from natural fat, or a petroleum type polyether polyol.

The amount of the polyisocyanate compound to be used at the time of the production of the polyurethane foam, is preferably an amount corresponding to an isocyanate index of from 70 to 125, more preferably from 80 to 120, particularly preferably from 85 to 120. The isocyanate index is a numerical value corresponding to 100 times the ratio of the number of isocyanate groups to the total number of active hydrogen in all of the polymer polyol, the polyol (A1),

the polyol (A2), the polyol (A3), the high molecular weight active hydrogen compound to be used as the case requires, the cross-linking agent (G), water, etc.

<Catalyst (H)>

The catalyst (hereinafter referred to also as the catalyst (H)) is a catalyst to accelerate the urethane-forming reaction.

The catalyst (H) may, for example, be an amine compound, an organic metal compound, a reactive amine compound or a carboxylic acid metal salt. As the catalyst (H), one type may be used alone, or two or more types may be used in combination.

The amine compound may, for example, be a dipropylene glycol solution of triethylene diamine, a dipropylene glycol solution of bis-(2-dimethylaminoethyl) ether, or an aliphatic amine such as a morpholine.

The reactive amine compound is an amine compound wherein a part of its structure is hydroxy-modified or aminated so as to be reactive with an isocyanate group.

The reactive amine compound may, for example, be dimethylethanolamine, trimethylaminoethylethanolamine or dimethylaminoethoxyethoxyethanolamine.

The amount of the amine compound catalyst or the reactive amine compound catalyst is preferably at most 2.0 parts by mass, more preferably from 0.05 to 1.5 parts by mass, per 100 parts by mass of the total of the polyol (A) and the high molecular weight active hydrogen compound to be used as the case requires.

The organic metal compound may, for example, be an organic tin compound, an organic bismuth compound, an organic lead compound or an organic zinc compound. Specific examples include di-n-butyltin oxide, di-n-butyltin dilaurate, di-n-butyltin, di-n-butyltin diacetate, di-n-octyltin oxide, di-n-octyltin dilaurate, monobutyltin trichloride, din-butyltin alkylmercaptan, di-ni-octyltin dialkylmeraptan, etc.

The amount of the organic metal compound is preferably at most 2.0 parts by mass, more preferably from 0.005 to 1.5 parts by mass, per 100 parts by mass of the total of the polyol (A) and the high molecular weight active hydrogen compound to be used as the case requires.

<Blowing agent>

The blowing agent (hereinafter referred to also as the blowing agent (I) is preferably at least one member selected from the group consisting of water and an inert gas.

The inert gas may be air, nitrogen gas or liquefied carbon dioxide gas.

The amount of the blowing agent (I) may be suitably adjusted depending upon the requirements such as the blowing rate, etc.

In a case where the blowing agent is composed solely of water, the amount of water is preferably at most 10 parts by mass, more preferably from 0.1 to 8 parts by mass, per 100 parts by mass of the total of the polyol (A) and the high molecular weight active hydrogen compound to be used as the case requires.

<Cross-linking agent (G)>

In the present invention, the cross-linking agent (G) may be used as the case requires. By using the cross-linking agent (G), it is possible to obtain an effect to improve the polyurethane foam, particularly the hardness thereof.

As such a cross-linking agent (G), a compound having at least two groups having active hydrogen (referred to as active hydrogen groups in this specification) is used. The active hydrogen group may, for example, be a hydroxy group, a primary amino group or a secondary amino group. As the cross-linking agent (G), one type may be used alone, or two or more types may be used in combination. However, one included in the above-mentioned polyol (A1) or (A2) or in the after-described cell opener, shall not be included in the cross-linking agent (G).

<Cell opener (F)>

In the present invention, the cell opener (F) may be used as the case requires. The cell opener (F) is a component to rupture some of cells in the polyurethane foam to lower the percentage of closed cells. By using the cell opener (F), it is possible to obtain an effect to adjust e.g. the hardness of the polyurethane foam depending upon the particular purpose.

As such a cell opener (F), a polyether polyol having an average number of hydroxy groups of from 2 to 8 and a hydroxy value of from 20 to 200 mgKOH/g may be used which is a polyether polyol obtainable via a step of ring-opening addition polymerization of ethylene oxide or a mixture of ethylene oxide and propylene oxide to the initiator in the presence of an alkali metal hydroxide catalyst.

When the polyether polyol as the cell opener (F) is taken as 100 mass%, the total of oxyethylene groups

contained in the cell opener (F) is from 50 to 100 mass%, preferably from 60 to 100 mass%, particularly preferably from 65 to 90 mass%. If the total of the oxyethylene groups is less than the lower limit value of the above range, the effect to lower the percentage of closed cells tends to be hardly obtainable.

As the cell opener, one type may be used alone, or two or more types may be used in combination.

The average number of hydroxy groups in the cell opener is from 2 to 8, preferably from 2 to 6. If the average number of hydroxy groups is less than the lower limit value of the above range, a problem of a decrease in the hardness of the urethane foam tends to result, and if it exceeds the upper limit value, deterioration of the durability tends to occur.

The hydroxy value of the cell opener (F) is from 20 to 200 mgKOH/g, preferably from 24 to 150 mgKOH/g, more preferably from 24 to 100 mgKOH/g, particularly preferably from 24 to 60 mgKOH/g. If the hydroxy value is less than the lower limit value of the above range, the viscosity tends to be high, whereby handling tends to be difficult, and if it exceeds the upper limit value, the durability tends to deteriorate.

The amount in total of the cell opener to be used, is preferably from 0.1 to 10 parts by mass, more preferably from 0.1 to 7 parts by mass, particularly preferably from 0.1 to 5 parts by mass, per 100 parts by mass of the total of the polyol (A) and the high molecular weight active hydrogen compound to be used as the case requires.

<Foam stabilizer (J)>

In the present invention, a foam stabilizer (J) may be used as the case requires. The foam stabilizer (J) is a component to form good cells. The foam stabilizer (J) may, for example, be a silicone-type foam stabilizer or a fluorinated foam stabilizer. The amount of the foam stabilizer to be used, is preferably from 0.001 to 10 parts by mass, more preferably from 0.01 to 5 parts by mass, per 100 parts by mass of the total of all polyols (A1), (A2) and (A3), the polymer polyol and the high molecular weight active hydrogen compound as the case requires, to be used for the production of a polyurethane foam.

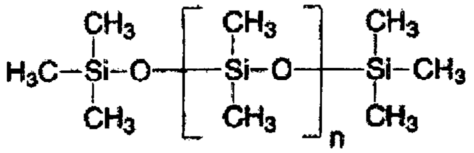

(II)

As the foam stabilizer (J), it is preferred to use a foam stabilizer (J1) made of a silicone-type compound, and as such a foam stabilizer (J1), it is particularly preferred to use a compound which is a dimethylpolysiloxane represented by the above formula (II) and having an average value of n in the formula being from 1 to 10 (hereinafter sometimes referred to as dimethylpolysiloxane (II)). The dimethylpolysiloxane (II) contributes to prevention of deterioration of the mechanical properties by the use of a stored polyol system liquid.

Here, even when the compound represented by the formula (II) (dimethylpolysiloxane) is one type of compound produced under a certain specific production condition, in such one type of compound, there are molecules having different values of n, and therefore, n is represented by an average value.

When the average value of n in the dimethylpolysiloxane (II) is at most 10, it is possible to readily obtain the effect to prevent deterioration of the mechanical properties by the use of a stored polyol system liquid, without impairing the physical properties of the foam. From the viewpoint of the foaming stability of the urethane foam, the lower limit for the average value of n is preferably at least 2, more preferably at least 3.

As the dimethylpolysiloxane (II), one type may be used alone, or two or more types different in the average value of n may be used in combination. When two or more types are to be used in combination, the average value of n in each dimethylpolysiloxane (II) may be within the above range.

The dimethylpolysiloxane (II) is available from commercial products.

The amount of the foam stabilizer (J) is preferably from 0.001 to 2 parts by mass, more preferably from 0.005 to 1.0 part by mass, particularly preferably from 0.01 to 0.8 part by mass, per 100 parts by mass of the total of the polymer polyol, the polyols (A1), (A2) and (A3) and the high molecular weight active hydrogen compound to be used as the case requires.

If the amount of the foam stabilizer (J) to be used, exceeds the upper limit value of the above range, deterioration of the physical property such as the durability is likely to be brought about. If it is less than the lower limit value of the above range, foaming of the urethane foam tends to be unstable.

<Other additives>

Other additives to be optionally used, may be a filler, a stabilizer, a coloring agent, a flame retardant, etc. They may suitably be selected for use from known materials.

<Method for producing polyurethane foam>

The method for producing a polyurethane foam of the present invention comprises a foaming step of reacting the polymer polyol, the polyols (A1), (A2) and (A3), the high molecular weight active hydrogen compound as the case requires, the polyisocyanate compound, the catalyst (H), the blowing agent (I), the cross-linking agent (G) and foam stabilizer (J) as the case requires, and other additives to be incorporated as the case requires.

The method for the foaming step may be a method (mold method) of foaming and molding, in a closed mold, a fluid (reactive mixture) containing the polymer polyol, the polyols (A1) and (A2), the polyisocyanate compound, the catalyst (H), the blowing agent (I), the cross-linking agent (G) and foam stabilizer (J) as the case requires, and other additives to be incorporated as the case requires, or a method (slab method) of foaming the reactive mixture in an open system.

[Mold method]

The mold method is preferably a method (reaction injection molding method) of injecting the reactive mixture directly into a closed mold, or a method of injecting the reactive mixture into an open-state mold and then closing the mold. As a latter method, a method of injecting the reactive mixture into the mold by means of a low pressure foaming machine or a high pressure foaming machine.

As the high pressure foaming machine, preferred is a type wherein two liquids are to be mixed. Of the two liquids, one liquid is a polyisocyanate compound, and the other liquid is a mixture of all components other than the polyisocyanate compound. In some cases, alternative may be a type wherein three liquids are to be mixed, using the catalyst (H) or the cell opener (usually used as dispersed or dissolved in a part of a high molecular weight polyol) as another separate component.

The temperature of the reactive mixture to be used in the foaming step is preferably from 10 to 40°C. When the temperature is at least 10°C, the viscosity of the reactive mixture will not be too high, and the mixing performance of liquid will be good. When the temperature is at most 40°C, the reactivity will not be too high, and the moldability, etc. will be good.

The mold temperature is preferably from 10 to 80°C, particularly preferably from 30 to 70°C.

The curing time is preferably from 3 to 20 minutes, more preferably from 3 to 10 minutes, particularly preferably from 1 to 7 minutes. When the curing time is at least 1 minute, curing can be sufficiently carried out. When the curing time is at most 20 minutes, the productivity will be good.

[Slab method]

The slab method may be a known method such as a one shot method, a semi-prepolymer method or a prepolymer method. In the production of the polyurethane foam, a known production apparatus may be employed.

A polyurethane foam, particularly a flexible polyurethane foam, produced by the production method of the present invention is useful for e.g. interior materials for automobilies (such as seat cushions, seat backrests, headrests or armrests), interior materials for railway vehicles, cushions for bedding or furniture (such as mattresses, sofas or cushions for chairs), etc.

Since it is excellent particularly in hardness and mechanical properties, it is suitable for seat cushions for automobiles or cushions for bedding.

Further, it is excellent in dimensional stability when used for a rigid polyurethane foam.

EXAMPLES

The present invention will be described in further detail with reference to Examples, but it should be understood that the present invention is by no means limited thereto. In the following, %, parts and ratios represent mass%, parts by mass and mass ratios, respectively, unless otherwise specified.

In Examples, the measurement and evaluation methods are as follows.

<OHV, viscosity>

With respect to OHV, the measurement was carried out in accordance with JIS K1557-1: 2007, and with respect to the viscosity, the measurement was carried out in accordance with JIS K1557-5: 2007.

<Average particle size>

Into a 25 ml glass bottle, 10 g of methanol is put, and 1 g of a polymer polyol is introduced and mixed to obtain a uniform liquid. Within 5 minutes after the mixing, the liquid is put into a measuring cell, and by means of a laser diffraction/scattering particle size distribution measuring apparatus [model No.: Microtrack FRA-9220, manufactured by Nikkiso Co., Ltd.], a volume-based cumulative 50% particle size is measured and taken as an average particle size (median diameter).

<Particle size distribution standard deviation: SD>

This is a standard deviation obtainable by the following formula and serves as an index for the distribution width of the measured particle size distribution, and it is not meant for a statistical standard deviation (statistical error).

$$SD = (d84\% - d16\%)/2$$

d84%: the particle size (μm) at a point where the cumulative curve becomes 84%.
D16%: the particle size (μm) at a point where the cumulative curve becomes 16%.

<Filterability>

An industrial woven wire mesh (300 mesh) with opening of 0.045 mm, cut out in a size larger than the effective filtration area, is set on a filtration device with a filtration area having a diameter of 40 mm. After confirming the mass (No) of a sample tray, the tray is set below the filtration device, and 1,000 g of a polymer polyol-dispersed polyol at ordinary temperature is put into the main body. The filtration device is covered with a lid, and pressure filtration is carried out for 2 minutes with nitrogen set at 0.2 MPa. A case where the sample is all passed within 2 minutes, is rated as "all passed". In a case where upon expiration of 2 minutes, the sample remains without passing, the mass ($N_1$) of the sample tray is confirmed, and a value calculated by the following formula, is taken as the filterability.

$$\text{Filterability (g/2min.)} = N_1 - N_0$$

<Polymer concentration>

Into a 50 ml centrifugal tube for centrifugal separation, about 5 g of a polymer polyol was precisely weighed and taken as the polymer polyol weight (W1). It was diluted by adding 25 g of methanol. By means of a cooled centrifugal separator [model No.: H-251, manufactured by Kokusan Co., Ltd.], centrifugal separation was carried out at 12,000 rpm for 30 minutes at 15°C. The supernatant was removed by decantation. After drying under reduced pressure of -0.10 MPa(G) at 40°C for 60 minutes, the solid product was pulverized and again dried under reduced pressure at 40°C for 120 minutes, whereupon the weight of the died precipitate was measured, and the weight was designated as (W2). A value calculated by the following formula was taken as the polymer concentration (mass%).

$$\text{Polymer concentration (mass\%)} = (W2) \times 100/(W1)$$

The compositions of the materials, the symbols, etc. used in Examples and Comparative Examples, are as follows.

(1) Polyols

The following polyols (X1) to (X3) and (Y1) to (Y6) are polyols produced by means of a KOH catalyst.
Polyol (X1): A polyol with hydroxy value = 37 and EO content = 12%, having propylene oxide (hereinafter PO) and ethylene oxide (hereinafter EO) block-added in this sequence to glycerin. Terminal primary-modification percentage = 72 mol%.
Polyol (X2): A polyol with hydroxy value = 42 and EO content = 12%, having PO and EO block-added in this sequence to glycerin. Terminal primary-modification percentage = 70 mol%.
Polyol (X3): A polyol with hydroxy value = 33.5 and EO content = 12%, having PO and EO block-added in this

sequence to glycerin. Terminal primary-modification percentage = 73 mol%.

Polyol (X4): A polyol with hydroxy value = 37.4 and EO content = 22%, having PO and EO block-added in this sequence to glycerin. Terminal primary-modification percentage = 86 mol%.

Polyol (Y1): A polyol with hydroxy value = 28 and EO content = 20%, having PO and EO block-added in this sequence to propylene glycol. Terminal primary-modification percentage = 85 mol%.

Polyol (Y2): A polyol with hydroxy value = 39 and EO content = 16%, having PO and EO block-added in this sequence to propylene glycol. Terminal primary-modification percentage = 75 mol%.

Polyol (Y3): A polyol with hydroxy value = 35 and EO content = 0%, having PO added to propylene glycol. Terminal primary-modification percentage = 0 mol%.

Polyol (Y4): A polyol with hydroxy value = 37 and EO content = 30%, having PO and EO block-added in this sequence to propylene glycol. Terminal primary-modification percentage = 85 mol%.

Polyol (Y5): A polyol with hydroxy value = 28.5 and EO content = 20%, having PO and EO block-added in this sequence to glycerin. Terminal primary-modification percentage = 89 mol%.

Polyol (Y6): A polyol with hydroxy value = 56 and EO content = 13%, having PO and EO block-added in this sequence to glycerin. Terminal primary-modification percentage = 63 mol%. (2) Free radical polymerization initiator

AMBN: 2,2'-azobis(2-methylbutylonitrile) [tradename "ABN-E", manufactured by JAPAN FINECHM COMPANY, INC.]

(3) Ethylenically unsaturated monomers

AN: Acrylonitrile, manufactured by Junsei Chemical Co., Ltd.

ST: Styrene, manufactured by GODO Co., Ltd.

(4) Isocyanate compound

TDI-80: tradename "Coronate T-80" [manufactured by Nippon Polyurethane Industry Co., Ltd.]

(5) Solvent

Methyl tert-butyl ether (MTBE): trade name "MTBE" [manufactured by GODO Co., Ltd.]

(6) Chain transfer agent

n-DM: trade name "n-dodecylmercaptan" [manufactured by Tokyo Chemical Industry Co., Ltd.]

[Method for producing ethylenically unsaturated macromonomer (B)]

Ethylenically unsaturated macromonomer (B) was produced by the following method.

Method for producing ethylenically unsaturated macromonomer (B1)

Into a four-necked flask equipped with a temperature-controller, a thermometer, vacuum impeller, a Dimroth condenser, a nitrogen inlet and an outlet, 1.0 mol of polyol (Y1) and 1.0 mol of 2-hydroxy methacrylate were introduced and, after flushing with nitrogen, heated to 40°C with stirring in a nitrogen atmosphere (till completion of the reaction). After reaching 40°C, 1.0 mol of TDI-80 was introduced, and after carrying out a reaction at 40°C for 1 hour, the reaction temperature was changed to 60°C. After reaching the reaction temperature of 60°C, the reaction was carried out for 6 hours, and as a catalyst for the reaction, triethylamine was added in an amount of 0.02% of the total charged amount of the polyol, the ethylenically unsaturated monomer and the polyisocyanate, and the reaction temperature was changed to 80°C. After reaching the reaction temperature of 80°C, the reaction was carried out for 2 hours. After adding methanol in an amount of 2% of the total charged amount of the polyol, the ethylenically unsaturated monomer and the polyisocyanate, the temperature was lowered to 60°C and the reaction was carried out for further 5 hours. Sampling was carried out to confirm that no absorption by isocyanate groups was observed by FT-IR, and ethylenically unsaturated macromonomer (B1) was obtained. The finish viscosity was 3900 mPa·s.

Method for producing ethylenically unsaturated macromonomers (B2) to (B6)

In the same manner as for the ethylenically unsaturated macromonomer (B1), ethylenically unsaturated macromonomers (B2) to (6) were obtained by reacting polyol (Y2) to (Y6), TDI-80 and 2-hydroxy methacrylate in a molar

ratio of 1:1:1.

Method for producing ethylenically unsaturated macromonomer (B7)

Into a four-necked flask equipped with a temperature-controller, a thermometer, vacuum impeller, a Dimroth condenser, a nitrogen inlet and an outlet, 1.0 mol of polyol (Y1) and 1.0 mol of 2-hydroxy methacrylate were introduced and, after flushing with nitrogen, heated to 40°C with stirring in a nitrogen atmosphere (till completion of the reaction). After reaching 40°C, 1.0 mol of TDI-80 was introduced, as a catalyst for the reaction, triethylamine was added in an amount of 0.02% of the total charged amount of the polyol, the ethylenically unsaturated monomer and the polyisocyanate, and the reaction temperature was changed to 80°C. After reaching the reaction temperature of 80°C, the reaction was carried out for 6 hours. After adding methanol in an amount of 2% of the total charged amount of the polyol, the ethylenically unsaturated monomer and the polyisocyanate, the reaction was carried out for further 1 hour. Sampling was carried out to confirm that no absorption by isocyanate groups was observed by FT-IR, and ethylenically unsaturated macromonomer (B7) was obtained. The finish viscosity was 5,500 mPa·s.

[Method for producing seed particle dispersion (E)]

A seed particle dispersion was produced by the following method.

Method for producing seed particle dispersion (E1)

Into a 4 L reaction tank equipped with a temperature-controller, vacuum impeller, a dropping pump, a pressure reducing device, a nitrogen inlet and an outlet, and into a monomer-feeding mixing tank, ethylenically unsaturated macromonomer (B1) and feed materials in the amounts as identified in Table 1 were charged, respectively. After completion of the charging, the reaction tank was heated to 80°C. After the inside temperature of the reaction tank reached 80°C, the mixture of ethylenically unsaturated macromonomer (B1) and feed materials prepared in the monomer mixing tank, was fed into the reaction tank over a period of 3 hours by means of a dropping pump while maintaining the temperature at 80°C. After feeding all the amounts, aging was carried out at 80°C for 3 hours to obtain seed particle dispersion (E1).

Method for producing seed particle dispersions (E2) to (E7)

In the same manner as for the seed particle dispersion (E1), seed particle dispersions (E2) to (E7) were obtained by reacting the amounts as identified in Table 1.

TABLE 1

| | | Seed particle dispersion (E1) | Seed particle dispersion (E2) | Seed particle dispersion (E3) | Seed particle dispersion (E4) | Seed particle dispersion (E5) | Seed particle dispersion (E6) | Seed particle dispersion (E7) |
|---|---|---|---|---|---|---|---|---|
| Amounts charged into reaction tank [parts by mass] | Ethylenically unsaturated macromonomer B1 | 42.4 | - | - | - | - | - | - |
| | Ethylenically unsaturated macromonomer B2 | | 42.4 | - | - | - | - | - |
| | Ethylenically unsaturated macromonomer B3 | - | - | 42.4 | - | - | - | - |
| | Ethylenically unsaturated macromonomer B4 | - | - | - | 42.4 | - | - | - |
| | Ethylenically unsaturated macromonomer B5 | - | - | - | - | 42.4 | - | - |
| | Ethylenically unsaturated macromonomer B6 | - | - | - | - | - | 42.4 | - |
| | Ethylenically unsaturated macromonomer B7 | - | - | - | - | - | - | 42.4 |
| | MTBE | 104.6 | 104.6 | 104.6 | 104.6 | 104.6 | 104.6 | 104.6 |

(continued)

| | | Seed particle dispersion (E1) | Seed particle dispersion (E2) | Seed particle dispersion (E3) | Seed particle dispersion (E4) | Seed particle dispersion (E5) | Seed particle dispersion (E6) | Seed particle dispersion (E7) |
|---|---|---|---|---|---|---|---|---|
| Amounts charged into monomer-feeding mixing tank [parts by mass] | Ethylenically unsaturated macromonomer B1 | 18.2 | - | - | - | - | - | - |
| | Ethylenically unsaturated macromonomer B2 | - | 18.2 | - | - | - | - | - |
| | Ethylenically unsaturated macromonomer B3 | - | - | 18.2 | - | - | - | - |
| | Ethylenically unsaturated macromonomer B4 | - | - | - | 18.2 | - | - | - |
| | Ethylenically unsaturated macromonomer B5 | - | - | - | - | 18.2 | - | - |
| | Ethylenically unsaturated macromonomer B6 | - | - | - | - | - | 18.2 | - |
| | Ethylenically unsaturated macromonomer B7 | - | - | - | - | - | - | 18.2 |
| | AN | 14.8 | 14.8 | 14.8 | 14.8 | 14.8 | 14.8 | 14.8 |
| | ST | 25.2 | 25.2 | 25.2 | 25.2 | 25.2 | 25.2 | 25.2 |

(continued)

| | | Seed particle dispersion (E1) | Seed particle dispersion (E2) | Seed particle dispersion (E3) | Seed particle dispersion (E4) | Seed particle dispersion (E5) | Seed particle dispersion (E6) | Seed particle dispersion (E7) |
|---|---|---|---|---|---|---|---|---|
| | MTBE | 44.8 | 44.8 | 44.8 | 44.8 | 44.8 | 44.8 | 44.8 |
| | n-DM | 0.5 | 0.5 | 0.5 | 0.5 | 0.5 | 0.5 | 0.5 |
| | AMBN | 0.5 | 0.5 | 0.5 | 0.5 | 0.5 | 0.5 | 0.5 |

EXAMPLE 1 [Production of polymer polyol 1]

Into a 4 L reaction tank equipped with a temperature-controller, vacuum impeller, a dropping pump, a pressure reducing device, a nitrogen inlet and an outlet, polyol X1 diluted with MTBE (polyol X1/MTBE = 100/20) was charged in the amount as identified in "initial charged amount in reaction tank" in Table 2 and heated to 115°C.

Into a monomer-feeding mixing tank, seed particle dispersion (E1) and feed materials were charged in the amounts as identified in Table 2. When the inside temperature of the reaction tank reached 115°C, a mixture of seed particle dispersion (E1) and feed materials in the amounts as identified in Table 2, was continuously fed so that the retention time in the reaction tank would be 1 hour. After feeding all the amounts, the obtained polymer polyol composition was transferred to a deaeration tank, and an unreacted monomer and the solvent were removed by reduced pressure deaeration under heating at 115°C under 0.001 MPa (Abs.) for 2 hours to obtain desired polymer polyol 1. The evaluation results of the obtained polymer polyol 1 are shown in Table 2.

TABLE 2

| | | | Ex. 1 | Ex. 2 | Ex. 3 | Ex. 4 | Ex. 5 | Ex. 6 | Ex. 23 |
|---|---|---|---|---|---|---|---|---|---|
| | | | Polymer polyol 1 | Polymer polyol 2 | Polymer polyol 3 | Polymer polyol 4 | Polymer polyol 5 | Polymer polyol 6 | Polymer polyol 12 |
| | | | A22-1 | A22-2 | A22-3 | A22-4 | A22-5 | A22-6 | A22-8 |
| Initial charged amount into reaction tank [parts by mass] | Polyol | X1 | 100 | 100 | - | - | - | - | |
| | | X2 | - | - | 100 | - | - | - | |
| | | X3 | - | - | - | 100 | 100 | 100 | |
| | | X4 | | | | | | | 100 |
| | Solvent | MTBE | 20 | 20 | 20 | 20 | 20 | 20 | 20 |
| Charged amount into monomer-feeding mixing tank [parts by mass] | Polyol | X1 | 51 | 45 | - | - | - | - | |
| | | X2 | - | - | 51 | - | - | - | |
| | | X3 | - | - | - | 51 | 51 | 51 | |
| | | X4 | | | | | | | 51 |
| | Seed particle dispersion * In brackets, the amount of the solvent contained in the seed particle dispersion | E1 | 10(6) | 15(9) | 10(6) | 10(6) | 5(3) | - | |
| | | E2 | - | - | - | - | - | 5(3) | 10(6) |
| | | E3 | - | - | - | - | - | - | |
| | | E4 | - | - | - | - | - | - | |
| | | E5 | - | - | - | - | - | - | |
| | | E6 | - | - | - | - | - | - | |
| | | E7 | - | - | - | - | - | - | |
| | Ethylenically unsaturated monomer | AN | 16.65 | 18.13 | 16.65 | 16.65 | 17.39 | 17.39 | 16.65 |
| | | ST | 28.35 | 30.87 | 28.35 | 28.35 | 29.61 | 29.61 | 28.35 |
| | | AN/ST ratio | 37/63 | ← | 37/63 | 37/63 | 37/63 | 37/63 | 30/70 |
| | Solvent | MTBE | 14 | 11 | 14 | 14 | 17 | 17 | 14 |
| | Polymerization initiator | AMBN | 0.5 | 0.5 | 0.5 | 0.5 | 0.5 | 0.5 | 0.5 |
| Evaluation results | OHV (mgKOH/g) | | 20.5 | 18.0 | 22.5 | 17.5 | 17.7 | 17.4 | |
| | Viscosity (mPa·s) | | 7700 | 13000 | 6600 | 7900 | 8100 | 8000 | 8200 |
| | Polymer concentration (%) | | 49 | 55 | 49 | 49 | 49 | 49 | 50 |
| | Polymer concentration (%) | | 23% | 25% | 23% | 23% | 24% | 24% | 23% |
| | Average particle size (μm) | | 1.04 | 1.03 | 1.04 | 1.04 | 1.19 | 1.14 | 1.06 |
| | Particle size distribution standard deviation (μm) | | 0.51 | 0.51 | 0.52 | 0.52 | 0.71 | 0.65 | 0.52 |
| | Filterability (g/2min.) | | All passed | All passed | All passed | All passed | All passed | All passed | All passed |

TABLE 2 (Continued)

| | | | Comp. Ex. 1 | Comp. Ex. 2 | Comp. Ex. 3 | Comp. Ex. 4 | Ref. Ex. 1 |
|---|---|---|---|---|---|---|---|
| | | | Polymer polyol 7 | Polymer polyol 8 | Polymer polyol 9 | Polymer polyol 10 | Polymer polyol 11 |
| | | | A22-7 | | | | |
| Initial charged amount into reaction tank [parts by mass] | Polyol | X1 | - | No operation was possible due to gelation of seed E4. | - | No operation was possible due to gelation of seed E6. | - |
| | | X2 | - | | - | | - |
| | | X3 | 100 | | 100 | | 100 |
| | | X4 | | | | | |
| | Solvent | MTBE | 20 | | 20 | | 20 |
| Charged amount into monomer-feeding mixing tank [parts by mass] | Polyol | X1 | - | | - | | - |
| | | X2 | - | | - | | - |
| | | X3 | 51 | | 51 | | 51 |
| | | X4 | | | | | |
| | Seed particle dispersion * In brackets, the amount of the solvent contained in the seed particle dispersion | E1 | - | | - | | - |
| | | E2 | - | | - | | - |
| | | E3 | 5(3) | | - | | - |
| | | E4 | - | | - | | - |
| | | E5 | - | | 5(3) | | - |
| | | E6 | - | | - | | - |
| | | E7 | - | | - | | 5(3) |
| | Ethylenically unsaturated monomer | AN | 17.39 | | 17.39 | | 17.39 |
| | | ST | 29.61 | | 29.61 | | 29.61 |
| | | AN/ST ratio | 37/63 | | 37/63 | | 37/63 |
| | Solvent | MTBE | 17 | | 17 | | 17 |
| | Polymerization initiator | AMBN | 0.5 | | 0.5 | | 0.5 |
| Evaluation results | OHV (mgKOH/g) | | 18.0 | | 17.9 | | 17.8 |
| | Viscosity (mPa·s) | | 10000 | | 9300 | | 13000 |
| | Polymer concentration (%) | | 49 | | 48 | | 49 |
| | Polymer concentration (%) | | 24% | | 24% | | 24% |
| | Average particle size (μm) | | 1.38 | | 1.45 | | 1.51 |
| | Particle size distribution standard deviation (μm) | | 1.71 | | 1.76 | | 1.81 |
| | Filterability (g/2min.) | | 380 | | 300 | | 180 |

EXAMPLES 2 to 6 and 23, COMPARATIVE EXAMPLES 1 to 4, and REFERENCE EXAMPLE 1 [Production of polymer polyols 2 to 12]

Polymer dispersed polyols 2 to 12 were obtained in the same manner as in Example 1 except that in Example 1, seed particle dispersions (E2) to (E7) and feed materials in the amounts as identified in Table 2 were used. The measurements and evaluations were carried out in the same manner as in Example 1. The results are shown in Table 2. The obtained polymer polyols 1 to 7 and 12 are named as A22-1 to A22-7 and A22-8, respectively, and used in the evaluations of polyurethane foams as described hereinafter.

In each of Examples 1 to 6 and 23, the ethylenically unsaturated macromonomer of the present application was used, whereby the dispersion stability of the polymer of polymer polyol was good without aggregation. In each of Comparative Examples 1 and 3, a polyol different from the polyol of the present application was used as the material for the ethylenically unsaturated macromonomer, whereby the average particle size of the polymer polyol was large, the polymer partially underwent aggregation, the filterability was poor, and the viscosity was high. In each of Comparative Examples 2 and 4, a polyol different from the polyol of the present application was used as the material for the ethylenically unsaturated macromonomer, whereby gelation was observed during the preparation of the seed particle dispersion.

In Reference Example 1, the reaction temperature was high at the time of producing the ethylenically unsaturated macromonomer, whereby the molecular weight of the macromonomer became high, and the polymer of the seed particle dispersion produced by using such an ethylenically unsaturated macromonomer, underwent gelation, and the finally obtained polymer polyol was poor in the stability and had a high viscosity.

Now, the method for producing a polyurethane foam of the present invention will be described in further detail with reference to Examples for flexible polyurethane foams and rigid polyurethane foams, but it should be understood that the present invention is by no means limited thereto.

The measurements were carried out by the following methods.

[Number average molecular weight and mass average molecular weight]

The number average molecular weight (Mn) and the mass average molecular weight (Mw) were measured by the following method.

With respect to several types of monodisperse polystyrene polymers different in the polymerization degree, which are commercially available as standard samples for measuring the molecular weights, GPC was measured by means of a commercially available GPC measuring apparatus (HLC-8220GPC, manufactured by Tosoh Corporation), and based on the relation between the molecular weight of polystyrene and the retention time, a calibration curve was

prepared.

A sample was diluted with tetrahydrofuran to 0.5 mass% and passed through a filter of 0.5 μm, whereupon with respect to the sample, GPC was measured by means of the above GPC measuring apparatus.

Using the above calibration curve, the GPC spectrum of the sample was analyzed by a computer to obtain the number average molecular weight (Mn) and the mass average molecular weight (Mw) of the sample.

TABLE 3

| | | Ex. 7 | Ex. 8 | Ex. 9 | Ex. 10 | Ex. 11 | Ex. 12 | Ex. 13 | Ex. 14 | Ex. 15 | Ex. 24 |
|---|---|---|---|---|---|---|---|---|---|---|---|
| Polyol (A1) [parts by mass] | A1-1 | 70 | | | | | | | | | 75 |
| | A1-2 | | 70 | 60 | 80 | | | | | | |
| | A1-3 | | | 10 | | | | | | | |
| | A1-4 | | | | | 70 | 20 | 35 | | 20 | |
| Polyol (A2) [parts by mass] | A2-1 | | | | | | | 35 | | 25 | |
| | A2-2 | | | | | | | | 35 | | |
| | X3 | | | | | | 40 | | 35 | 25 | |
| Polymer polyol [parts by mass] | A21-1 | | | | | | | | | | |
| | A22-1 | 30 | 30 | 30 | | | | | | 30 | |
| | A22-2 | | | | 20 | | | | 30 | | |
| | A22-3 | | | | | 30 | | | | | |
| | A22-4 | | | | | | 40 | 30 | | | |
| | A22-8 | | | | | | | | | | 25 |
| Cross-linking agent (G) [parts by mass] | G-1 | 1.5 | 1.5 | 1.5 | 3 | 2 | 1 | 1 | 1.5 | 1 | 1.5 |
| | G-2 | | | | | 1 | | 1 | 1 | 1 | |
| | G-3 | 0.5 | 0.5 | 0.5 | 1 | | 0.5 | 0.5 | 0.5 | 0.5 | 0.5 |
| | G-4 | | | | | | 1 | 1 | | 0.5 | |
| Cell opener(F) [parts by mass] | F-1 | 1.5 | 1.5 | 1.5 | 1.5 | 2 | 2 | 1.5 | 1.5 | 1.5 | 1.5 |
| Catalyst (H) [parts by mass] | H-1 | 0.5 | 0.5 | 0.5 | 0.5 | 0.5 | 0.5 | 0.5 | 0.5 | 0.5 | 0.5 |
| | H-2 | 0.02 | 0.02 | 0.02 | 0.02 | 0.1 | 0.1 | 0.1 | 0.1 | 0.1 | 0.02 |
| Silicone foam stabilizer (J) [parts by mass] | J-1 | 0.2 | 0.2 | 0.2 | | | | | | | 0.2 |
| | J-2 | | | | 1 | | | | | 1 | |
| | J-3 | | | | | 1.5 | 1.5 | 1 | 1 | | |
| | J1-1 | | | | | | | 0.1 | | | |
| Blowing agent (D) [parts by mass] | D-1 | 2.4 | 2.4 | 2.4 | 2.4 | 2.7 | 2.7 | 3.5 | 3.5 | 4.2 | 2.4 |
| Polyisocyanate compound (b2) [INDEX] | b2-1 | 100 | 100 | 100 | 100 | 100 | 100 | 100 | 100 | 100 | 100 |
| Total density | kg/m$^3$ | 63.1 | 63.2 | 63.5 | 62.4 | 63.6 | 62.9 | 43.1 | 43.5 | 39.1 | 63.5 |
| Core density | kg/m$^3$ | 58.4 | 58.5 | 57.1 | 58.1 | 58.9 | 58.1 | 38.1 | 38.4 | 35.1 | 58.8 |
| ILD hardness Initial thickness | mm | 98.3 | 98.1 | 98.3 | 98.2 | 98.9 | 99.1 | 98.1 | 98.4 | 98.1 | 97.9 |

(continued)

| | | Ex. 7 | Ex. 8 | Ex. 9 | Ex. 10 | Ex. 11 | Ex. 12 | Ex. 13 | Ex. 14 | Ex. 15 | Ex. 24 |
|---|---|---|---|---|---|---|---|---|---|---|---|
| 25% ILD (100 mm thickness) | N/ $314cm^2$ | 281 | 230 | 242 | 228 | 280 | 277 | 228 | 239 | 198 | 285 |
| 65% ILD (100 mm thickness) | N/ $314^{cm2}$ | 703 | 641 | 669 | 621 | 723 | 693 | 596 | 640 | 521 | 719 |
| SAG-FACTOR | - | 2.5 | 2.79 | 2.76 | 2.72 | 2.58 | 5.5 | 2.61 | 2.68 | 2.63 | 2.52 |
| ILD hardness Initial thickness | mm | | | | | | | | | | |
| 25% ILD (100 mm thickness) | N/ $314^{cm2}$ | | | | | | | | | | |
| 65% ILD (100 mm thickness) | N/ $314^{cm2}$ | | | | | | | | | | |
| SAG-FACTOR | - | | | | | | | | | | |
| ILD hardness Initial thickness | mm | 49.1 | 49 | 49.3 | 49.2 | 49.4 | 49.1 | | | | 48.8 |
| 25% ILD (100 mm thickness) | N/ $314^{cm2}$ | 230 | 190 | 205 | 190 | 229 | 229 | | | | 235 |
| 65% ILD (100 mm thickness) | N/ $314^{cm2}$ | 588 | 511 | 543 | 505 | 590 | 573 | | | | 595 |
| SAG-FACTOR | - | 2.56 | 2.69 | 2.65 | 2.66 | 2.58 | 2.5 | | | | 2.53 |
| Air permeability of core portion | L/min | 19 | 29 | 22 | 24 | 17 | 22 | 33 | 42 | 33 | 15 |
| Modulus of repulsion elasticity entirety | % | 67 | 67 | 68 | 68 | 66 | 67 | 64 | 65 | 63 | 65 |
| Modulus of repulsion elasticity core portion | % | 72 | 73 | 73 | 71 | 70 | 72 | 68 | 69 | 67 | 70 |
| Tear strength | N/cm | 5.8 | 6.5 | 6.8 | 6.5 | 6.9 | 6.4 | 6.9 | 7.1 | 6.3 | 5.6 |
| Tensile strength | kPa | 140 | 151 | 166 | 155 | 169 | 161 | 173 | 177 | 155 | 135 |
| Elongation | % | 101 | 118 | 110 | 116 | 109 | 111 | 105 | 105 | 104 | 105 |
| Dry thermal compression residual strain | % | 2.1 | 1.9 | 1.8 | 2.1 | 2.6 | 2.5 | 3.1 | 3.2 | 3.9 | 2.2 |
| Wet thermal compression residual strain | % | 7.1 | 6.4 | 6.3 | 7.4 | 7.5 | 7.4 | 14.1 | 13.1 | 14.3 | 7.0 |
| Hysteresis loss rate | % | 14.2 | 13.9 | 13.8 | 13.9 | 14.1 | 14 | 17.1 | 17.4 | 18.8 | 14.5 |
| Stress relaxation rate | % | 10.1 | 9.9 | 9.4 | 10.3 | 10.8 | 10.9 | 13.2 | 13.9 | 14.5 | 10.2 |
| Resonance frequency | Hz | 3.11 | 3.15 | 3.05 | 3.12 | 3.15 | 3.13 | 3.52 | 3.65 | 3.71 | 3.12 |

(continued)

| | | Ex. 7 | Ex. 8 | Ex. 9 | Ex. 10 | Ex. 11 | Ex. 12 | Ex. 13 | Ex. 14 | Ex. 15 | Ex. 24 |
|---|---|---|---|---|---|---|---|---|---|---|---|
| Resonance magnification | A/AO | 3.66 | 3.7 | 3.77 | 3.44 | 3.22 | 3.31 | 3.55 | 3.66 | 3.55 | 3.45 |
| 6Hz resonance transmissibility | - | 0.43 | 0.65 | 0.41 | 0.45 | 0.46 | 0.45 | 0.81 | 0.83 | 0.89 | 0.44 |
| 10Hz resonance transmissibility | - | 0.11 | 0.12 | 0.1 | 0.12 | 0.12 | 0.12 | 0.15 | 0.17 | 0.2 | 0.12 |

TABLE 4

| | | Ex. 16 | Ex. 17 | Ex. 18 | Ex. 19 | Ex. 20 | Ex. 21 | Ex. 22 |
|---|---|---|---|---|---|---|---|---|
| Polyol (A1) [parts by mass] | A1-1 | | | | 60 | | | |
| | A1-2 | | | | | | | |
| | A1-3 | | | | | | | |
| | A1-4 | 10 | 10 | | | 30 | 20 | 10 |
| Polyol (A2) [parts by mass] | A2-1 | 20 | | | | 30 | 20 | |
| | A2-2 | | | 30 | | | | |
| | X3 | 20 | 70 | 50 | | | 20 | 60 |
| Polymer polyol [parts by mass] | A21-1 | | | | 40 | 40 | 40 | 30 |
| | A22-1 | | 20 | | | | | |
| | A22-2 | 50 | | 20 | | | | |
| | A22-3 | | | | | | | |
| | A22-4 | | | | | | | |
| | A22-8 | | | | | | | |
| Cross-linking agent (G) [parts by mass] | G-1 | 1 | | | 1.5 | 1 | 1 | |
| | G-2 | 1 | 1 | 1 | | 1 | 1 | 1 |
| | G-3 | 0.5 | 0.5 | 0.3 | 0.5 | 0.5 | 0.5 | 0.5 |
| | G-4 | 0.5 | 0.5 | 0.5 | | 1 | 0.5 | 0.5 |
| Cell opener (F) [parts by mass] | F-1 | 1.5 | 1 | 1 | 1.5 | 1.5 | 1.5 | 1 |
| Catalyst (H) [parts by mass] | H-1 | 0.5 | 0.5 | 0.5 | 0.5 | 0.5 | 0.5 | 0.5 |
| | H-2 | 0.1 | 0.1 | 0.1 | 0.02 | 0.1 | 0.1 | 0.1 |
| Silicone foam stabilizer (J) [parts by mass] | J-1 | | | | 0.2 | | | |
| | J-2 | 1 | | | | | 1 | |
| | J-3 | | 1 | 1 | | 1 | | 1 |
| | J1-1 | | | | | 0.1 | | |
| Blowing agent (D) [parts by mass] | D-1 | 4.2 | 4.8 | 4.8 | 2.4 | 3.5 | 4.2 | 4.8 |
| Polyisocyanate compound (b2) [INDEX] | b2-1 | 105 | 105 | 105 | 100 | 105 | 105 | 105 |
| Total density | kg/m$^3$ | 39.5 | 32.5 | 33.1 | 63.4 | 43.1 | 39.2 | 33.2 |

(continued)

| | | Ex. 16 | Ex. 17 | Ex. 18 | Ex. 19 | Ex. 20 | Ex. 21 | Ex. 22 |
|---|---|---|---|---|---|---|---|---|
| Core density | $kg/m^3$ | 35.2 | 29.1 | 29.5 | 58.1 | 38.4 | 35.3 | 29.4 |
| ILD hardness Initial thickness | mm | 98.2 | | | 98.2 | 98.1 | 98.1 | |
| 25% ILD (100 mm thickness) | $N/314cm^2$ | 225 | | | 267 | 206 | 195 | |
| 65% ILD (100 mm thickness) | $N/314cm^2$ | 609 | | | 668 | 572 | 512 | |
| SAG-FACTOR | - | 2.71 | | | 2.5 | 2.78 | 2.63 | |
| ILD hardness Initial thickness | mm | | 68.3 | 67.9 | | | | 68.8 |
| 25% ILD (100 mm thickness) | $N/314^{cm2}$ | | 124 | 144 | | | | 111 |
| 65% ILD (100 mm thickness) | $N/314^{cm2}$ | | 325 | 360 | | | | 289 |
| SAG-FACTOR | - | | 2.6 | 2.5 | | | | 2.6 |
| ILD hardness Initial thickness | mm | | | | 49.2 | | | |
| 25% ILD (100 mm thickness) | $N/314^{cm2}$ | | | | 205 | | | |
| 65% ILD (100 mm thickness) | $N/314^{cm2}$ | | | | 527 | | | |
| SAG-FACTOR | - | | | | 2.55 | | | |
| Air permeability of core portion | L/min | 29 | 30 | 34 | 18 | 31 | 32 | 31 |
| Modulus of repulsion elasticity entirety | % | 63 | 63 | 62 | 65 | 65 | 63 | 62 |
| Modulus of repulsion elasticity core portion | % | 66 | 65 | 64 | 70 | 69 | 68 | 65 |
| Tear strength | N/cm | 6.5 | 5.9 | 5.9 | 6.4 | 6.9 | 6.1 | 5.3 |
| Tensile strength | kPa | 144 | 155 | 154 | 152 | 171 | 150 | 150 |
| Elongation | % | 106 | 109 | 108 | 111 | 104 | 101 | 103 |
| Dry thermal compression residual strain | % | 3.8 | 5.1 | 5.4 | 2.3 | 3.1 | 4 | 5.4 |
| Wet thermal compression residual strain | % | 13.6 | 18.1 | 18.7 | 7.3 | 15.2 | 15.5 | 19.8 |
| Hysteresis loss rate | % | 19.1 | 21.2 | 21.5 | 14.6 | 18.2 | 19.2 | 22.1 |
| Stress relaxation rate | % | 14.9 | 16.8 | 16.8 | 10.5 | 14.5 | 15.5 | 17.9 |
| Resonance frequency | Hz | 3.82 | | | 3.12 | 3.71 | 3.81 | |
| Resonance magnification | A/AO | 3.49 | | | 3.69 | 3.51 | 3.62 | |
| 6Hz resonance transmissibility | - | 0.91 | | | 0.45 | 0.88 | 0.93 | |
| 10Hz resonance transmissibility | - | 0.21 | | | 0.12 | 0.18 | 0.2 | |

The respective components disclosed in Tables 3 and 4 will be described.

[Preparation Example 1: Preparation of TBA-DMC catalyst]

Zinc hexacyanocobaltate complex (DMC catalyst) having tert-butyl alcohol (hereinafter referred to as TBA) coordinated, was prepared as follows.

Into a 500 mL flask, an aqueous solution comprising 10.2 g of zinc chloride and 10 g of water, was put. While stirring the zinc chloride aqueous solution at a rotational speed of 300 rpm, an aqueous solution comprising 4.2 g of potassium hexacyanocobaltate ($K_3Co(CN)_6$) and 75 g of water, was dropwise added to the zinc chloride aqueous solution over a period of 30 minutes. During the period, the mixed solution in the flask was maintained at 40°C. After completion of the dropwise addition of the potassium hexacyanocobaltate aqueous solution, the mixture in the flask was stirred for

further 30 minutes, and then, a mixture comprising 80 g of tert-butyl alcohol, 80 g of water and 0.6 g of polyol P, was added, followed by stirring at 40°C for 30 minutes and further at 60°C for 60 minutes.

Polyol P is a polyoxypropylene diol having an average number of hydroxy groups per molecule of 2 and a number average molecular weight (Mn) of 2,000, obtained by ring-opening addition polymerization of PO to propylene glycol in the presence of a KOH catalyst, followed by dealkalization purification.

The obtained mixture was filtrated under pressure (0.25 MPa) by means of a circular filter plate having a diameter of 125 mm and a quantitative filter paper for fine particles (No. 5C, manufactured by ADVANTEC Co., Ltd.) to obtain a solid (cake) containing a double metal cyanide complex.

The cake was transferred to a flask, and a mixed liquid comprising 36 g of TBA and 84 g of water, was added, and the mixture was stirred for 30 minutes, followed by pressure filtration under the same conditions as above to obtain a cake.

The cake was transferred to a flask, and a mixed liquid comprising 108 g of TBA and 12 g of water was further added, followed by stirring for 30 minutes to obtain a slurry having the double metal cyanide complex catalyst dispersed in the TBA-water mixed liquid. To the slurry, 120 g of polyol P was added, and then, volatile components were distilled off under reduced pressure at 80°C for 3 hours and further at 115°C for 3 hours to obtain a slurry-form DMC catalyst (TBA-DMC catalyst). The concentration (active ingredient concentration) of the DMC catalyst (solid catalyst component) contained in the slurry was 5.33 mass%.

[Production Example 1: Production of polyol (A1-1)]

Initiator (a1) used in this Example is a polyoxypropylene triol having a number average molecular weight (Mn) of 1,500 and a hydroxy value of 112 mgKOH/g, produced by ring-opening addition polymerization of PO to glycerin by means of a KOH catalyst, followed by purification by means of Kyowado 600S (product name, synthetic adsorbent, manufactured by Kyowa Chemical Industry Co., Ltd.).

As a pressure resistant reactor, a stainless steel (JIS-SUS-316) pressure resistant reactor (volume: 10 L, diameter: 200 mm, height: 320 mm) was used, which is equipped with a stirring means provided with one set of anchor wing and two sets of 45° inclined two slant paddles and which is provided, inside of the reactor, with a cooling pipe for cooling water to flow therein.

For the measurement of the temperature of the reaction liquid, the liquid temperature was measured by a thermometer installed at a lower portion inside of the pressure resistant reactor.

Firstly, into the pressure resistant reactor, 1,000 g of initiator (a1) and the TBA-DMC catalyst slurry produced in Preparation Example 1 were introduced to form a reaction liquid. The amount of the TBA-DMC catalyst slurry introduced, was such an amount that the concentration of metals of the TBA-DMC catalyst in the reaction liquid (hereinafter referred to as the initial catalyst metal concentration) became 46 ppm.

Then, inside of the pressure resistant reactor was flushed with nitrogen, and then, the reaction liquid was heated with stirring. When it reached 135°C (initial temperature), the heating was stopped, and while stirring was continued, 120 g of PO (12 parts by mass per 100 parts by mass of the initiator) was supplied into the pressure resistant reactor and reacted.

When PO was supplied into the pressure resistant reactor (initiation of the initial activation step), the internal pressure of the pressure resistant reactor once increased and then gradually decreased, whereupon it was confirmed that the internal pressure became to be the same as the internal pressure of the pressure resistant reactor immediately before supplying PO (completion of the initial activation step). During the period, when the decrease of the internal pressure started, the temperature of the reaction liquid once increased and then gradually decreased. The maximum temperature of the reaction liquid was 165°C. In this Example, cooling was carried out after the temperature increase stopped.

Thereafter, PO was supplied and reacted, and then, EO was added to the terminals by means of a KOH catalyst (additional polymerization step). That is, while stirring the reaction liquid, it was confirmed that the reaction liquid was cooled to 135°C, and while maintaining the temperature at 135°C, 4,728 g of PO was supplied into the pressure resistant reactor. After confirming that no change in the internal pressure was observed any longer and the reaction was completed, 20 g of a KOH catalyst (active ingredient concentration of 0.3% to the final product) was added and alcoholate-formation by dehydration at 120°C for 2 hours was carried out. Then, while maintaining the reaction liquid at 120°C, 950 g of EO was additionally supplied into the pressure resistant reactor. After confirming that no change in the internal pressure was observed any longer and the reaction was completed, an operation for neutralization and removal of the catalyst was carried out by means of Kyowado 600S (product name, synthetic adsorber, manufactured by Kyowa Chemical Industry Co., Ltd.).

The polyol thus obtained, had an average number of hydroxy groups of 3, a hydroxy value of 16.8 mgKOH/g, a number average molecular weight (Mn) of 13,228, an unsaturation degree of 0.007 meq/g, a molecular weight distribution (Mw/Mn) of 1.045 and an oxyethylene group content of 14 mass%.

[Production Example 2: Production of polyol (A1-2)]

In Production Example 1, after the additional polymerization step, the amount of EO to be added to the terminals by means of a KOH catalyst was changed.

That is, in the same manner as in Production Example 1, up to the initial activation step was carried out, and after the temperature increase of the reaction liquid stopped, cooling was carried out. While stirring the reaction liquid, it was confirmed that the reaction liquid was cooled to 135°C, and while maintaining the temperature at 135°C, 5,129 g of PO was supplied into the pressure resistant reactor. After confirming that no change in the internal pressure was observed any longer and the reaction was completed, 20 g of a KOH catalyst (active ingredient concentration of 0.3% to the final product) was added and alcoholate-formation by dehydration at 120°C for 2 hours was carried out. Then, while maintaining the reaction liquid at 120°C, 670 g of EO was additionally supplied into the pressure resistant reactor. After confirming that no change in the internal pressure was observed any longer and the reaction was completed, an operation for neutralization and removal of the catalyst was carried out in the same manner as in Production Example 1.

The polyol (A1-2) thus obtained, had an average number of hydroxy groups of 3, a hydroxy value of 16.8 mgKOH/g, a number average molecular weight (Mn) of 13,067, an unsaturation degree of 0.007 meq/g, a molecular weight distribution (Mw/Mn) of 1.079 and an oxyethylene group content of 10 mass%.

[Production Example 3: Production of polyol (A1-3)]

Initiator (a2) used in this Example is a polyoxypropylene polyol having a number average molecular weight (Mn) of 1,200 and a hydroxy value of 187 mgKOH/g, produced by ring-opening addition polymerization of PO to pentaerythritol by means of a KOH catalyst, followed by purification by means of Kyowado 600S (product name, synthetic adsorbent, manufactured by Kyowa Chemical Industry Co., Ltd.).

As a pressure resistant reactor, the same one as used in Production Example 1 was used.

Firstly, into the pressure resistant reactor, 800 g of initiator (a2) and the TBA-DMC catalyst slurry produced in Preparation Example 1 were introduced to form a reaction liquid. The amount of the TBA-DMC catalyst slurry introduced, was such an amount that the initial catalyst metal concentration became 46 ppm.

Then, inside of the pressure resistant reactor was flushed with nitrogen, and then, the reaction liquid was heated with stirring. When it reached 135°C (initial temperature), the heating was stopped, and while stirring was continued, 96 g of PO (12 parts by mass per 100 parts by mass of the initiator) was supplied into the pressure resistant reactor and reacted.

In the same manner as in Production Example 1, the completion of the initial activation step was confirmed based on that the internal pressure became to be the same as the internal pressure of the pressure resistant reactor immediately before supplying PO. During the period, the maximum temperature of the reaction liquid was 166°C.

Thereafter, PO was supplied and reacted, and then, EO was added to the terminals by means of a KOH catalyst (additional polymerization step). That is, while stirring the reaction liquid, it was confirmed that the reaction liquid was cooled to 135°C, and while maintaining the temperature at 135°C, 5,197 g of PO was supplied into the pressure resistant reactor. After confirming that no change in the internal pressure was observed any longer and the reaction was completed, 20 g of a KOH catalyst (active ingredient concentration of 0.3% to the final product) was added and alcoholate-formation by dehydration at 120°C for 2 hours was carried out. Then, while maintaining the reaction liquid at 120°C, 670 g of EO was additionally supplied into the pressure resistant reactor. After confirming that no change in the internal pressure was observed any longer and the reaction was completed, an operation for neutralization and removal of the catalyst was carried out in the same manner as in Production Example 1.

The polyol (A1-3) thus obtained, had an average number of hydroxy groups of 4, a hydroxy value of 22.0 mgKOH/g, a number average molecular weight (Mn) of 12,792, an unsaturation degree of 0.006 meq/g and a molecular weight distribution (Mw/Mn) of 1.065.

[Production Example 4: Production of polyol (A1-4)]

As a pressure resistant reactor, the same one as used in Production Example 1 was used.

Firstly, into the pressure resistant reactor, 1,427 g of initiator (a1) and the TBA-DMC catalyst slurry produced in Preparation Example 1 were introduced to form a reaction liquid. The amount of the TBA-DMC catalyst slurry introduced, was such an amount that the initial catalyst metal concentration became 46 ppm.

Then, inside of the pressure resistant reactor was flushed with nitrogen, and then, the reaction liquid was heated with stirring. When it reached 135°C (initial temperature), the heating was stopped, and while stirring was continued, 143 g of PO (10 parts by mass per 100 parts by mass of the initiator) was supplied into the pressure resistant reactor and reacted.

In the same manner as in Production Example 1, the completion of the initial activation step was confirmed

based on that the internal pressure became to be the same as the internal pressure of the pressure resistant reactor immediately before supplying PO. During the period, the maximum temperature of the reaction liquid was 164°C.

Thereafter, PO was supplied and reacted, and then, EO was added to the terminals by means of a KOH catalyst (additional polymerization step). That is, while stirring the reaction liquid, it was confirmed that the reaction liquid was cooled to 135°C, and while maintaining the temperature at 135°C, 4,383 g of PO was supplied into the pressure resistant reactor. After confirming that no change in the internal pressure was observed any longer and the reaction was completed, 20 g of a KOH catalyst (active ingredient concentration of 0.3% to the final product) was added and alcoholate-formation by dehydration at 120°C for 2 hours was carried out. Then, while maintaining the reaction liquid at 120°C, 816 g of EO was additionally supplied into the pressure resistant reactor. After confirming that no change in the internal pressure was observed any longer and the reaction was completed, an operation for neutralization and removal of the catalyst was carried out in the same manner as in Production Example 1.

The polyol (A1-4) thus obtained, had an average number of hydroxy groups of 3, a hydroxy value of 24.0 mgKOH/g, a number average molecular weight (Mn) of 10,193, an unsaturation degree of 0.007 meq/g, a molecular weight distribution (Mw/Mn) of 1.057 and an oxyethylene group content of 12.0 mass%.

[Production Example 5: Production of polyol (A2-1)]

In this Example, to the initiator (a2), in the presence of a KOH catalyst, PO was ring-opening addition polymerized and then, EO was ring-opening addition polymerized.

That is, into the same reactor as in Production Example 1, 1,000 g of initiator (a2), 23 g of the KOH catalyst (active ingredient concentration of 0.3% to the final product) and 5,664 g of PO were introduced and stirred at 120°C for 10 hours to carry out the ring-opening addition polymerization. Thereafter, 1,023 g of EO was further introduced and stirred at 110°C for 1.5 hours to carry out the ring-opening addition polymerization to obtain polyol (A2-1).

The polyol (A2-1) thus obtained, had an average number of hydroxy groups of 4, a hydroxy value of 28 mgKOH/g, a number average molecular weight (Mn) of 11,029, an unsaturation degree of 0.065 meq/g, a molecular weight distribution (Mw/Mn) of 1.040 and an oxyethylene group content of 13 mass%.

[Production Example 6: Production of polyol (A2-2)]

Initiator (a4) used in this Example is a polyoxypropylene triol having a number average molecular weight (Mn) of 1,000 and a hydroxy value of 168 mgKOH/g, produced by ring-opening addition polymerization of PO to glycerin by means of a KOH catalyst.

Into the same reactor as in Production Example 1, 953 g of initiator (a2), 21 g of a CsOH catalyst (active ingredient concentration of 0.3% to the final product) and 4,996 g of PO were introduced and stirred at 120°C for 10 hours to carry out the ring-opening addition polymerization. Thereafter, 1,060 g of EO was further introduced and stirred at 110°C for 1.5 hours to carry out the ring-opening addition polymerization to obtain polyol (A2-2).

The polyol (A2-2) thus obtained, had an average number of hydroxy groups of 3, a hydroxy value of 24 mgKOH/g, a number average molecular weight (Mn) of 10,037, an unsaturation degree of 0.065 meq/g, a molecular weight distribution (Mw/Mn) of 1.025 and an oxyethylene group content of 15 mass%.

[Polymer polyol (A21-1)]

Polymer dispersed polyol (A21-1) having a hydroxy value of 24 mgKOH/g was used, which is obtainable by polymerizing acrylonitrile and styrene in amounts of 77.5 mass % and 22.5 mass%, respectively, without using the seed particle dispersion of the present invention, in a base polyol having an average number of hydroxy groups of 3 and a hydroxy value of 34 mgKOH/g and containing 14.5 mass% of oxyethylene groups at terminals. The content of polymer particles in the polymer dispersed polyol (A21-1) was 35 mass%.

The base polyol is one obtained by ring-opening addition polymerization of PO to an initiator in the presence of a KOH catalyst, followed by ring-opening addition polymerization of EO. The initiator is a polyether polyol having a number average molecular weight (Mn) of 1,300, obtained by ring-opening addition polymerization of PO to glycerin.

That is, into the same reactor as in Production Example 1, 1,767 g of the initiator, 23 g of the KOH catalyst (active ingredient concentration of 0.3% to the final product) and 4,641 g of PO were introduced and stirred at 120°C for 8 hours to carry out the ring-opening addition polymerization. Thereafter, 1,141 g of EO was further introduced and stirred at 110°C for 1.5 hours to carry out the ring-opening addition polymerization, whereupon the obtainable polyoxypropyleneoxyethylene polyol was used as the base polyol.

[Cross-linking agent (G-1)]

A polyether polyol having a hydroxy value of 562 mgKOH/g, obtained by ring-opening addition polymerization of EO to pentaerythritol in the presence of a KOH catalyst.

[Cross-linking agent (G-2)]

A polyether polyol having a hydroxy value of 450 mgKOH/g and an oxyethylene group content of 28 mass%, obtained by ring-opening addition polymerization of PO to sorbitol in the presence of a KOH catalyst, followed by ring-opening addition polymerization of EO.

[Cross-linking agent (G-3)]

Diethanolamine.

[Cross-linking agent (G-4)]

Glycerin (hydroxy value: 1,829 mgKOH/g).

[Cell opener (F-1)]

A polyether polyol having a hydroxy value of 48 mgKOH/g and an EO content of 85 mass%, obtained by ring-opening addition polymerization of a mixture of PO and EO to glycerin in the presence of a KOH catalyst.

[Catalyst (H-1)]

A dipropylene glycol (DPG) solution containing 33 mass% of triethylenediamine (trade name: TEDA L33, manufactured by Tosoh Corporation).

[Catalyst (H-2)]

A DPG solution containing 70 mass% of bis-(2-dimethylaminoethyl) ether (trade name: TOYOCAT ET, manufactured by Tosoh Corporation).

[Foam stabilizer (J-1)]

Trade name: SZ-1325, manufactured by Dow Corning Toray Co.,Ltd

[Foam stabilizer (J-2)]

Trade name: SZ-1327, manufactured by Dow Corning Toray Co.,Ltd

[Foam stabilizer (J-3)]

Trade name: SF-2962, manufactured by Dow Corning Toray Co.,Ltd

[Foam stabilizer (J1-1)]

Trade name: KF-96A-6cs, manufactured by Shin-etsu Chemical Industry Co.,Ltd, dimethyl polysiloxane (II) represented by the above formula (II) wherein the average value of n is 7.3.

[Blowing agent (D-1)]

Water

[Polyisocyanate compound]

A mixture comprising 80 mass% of TDI-80 (isomer ratio of 80 mass% of 2,4-TDI and 20 mass% of 2,6-TDI)

and 20 mass% of polymethylenepolyphenyl polyisocyanate (commonly called Polymeric MDI). Trade name: Coronate 1021 (manufactured by Nippon Polyurethane Industry Co., Ltd.)

<Production of flexible polyurethane foam>

[Ex 7 to 18, Ex 19 to 22, Ex 24]

Flexible polyurethane foams were produced with compositions as shown in Tables 3 and 4. Ex 7 to 18 and Ex 24 are working Examples of the present invention, and Ex 19 to 22 are comparative Examples.

With respect to units for the amounts in the Tables, the polyisocyanate compound is represented by the isocyanate index (identified by "INDEX" in the Tables), and others are represented by parts by mass.

Firstly, in each composition shown in the Tables, the predetermined amount of each component except for the polyisocyanate compound was weighed and put into a 2 L plastic container and by means of a mixer equipped with impeller vanes, stirred and mixed for 30 seconds at a rotational speed of 3,000 rpm to prepare a polyol system liquid.

Then, the predetermined amount of the polyisocyanate compound was weighed and put into a 500 cc plastic container.

After adjusting the polyol system liquid immediately after preparation to a liquid temperature of 30°C and the polyisocyanate compound to a liquid temperature of 25°C, the polyisocyanate compound was put into the polyol system liquid and by means of the above mixer, stirred and mixed for 5 seconds at a rotational speed of 3,000 rpm to prepare a reactive mixture. The reactive mixture immediately after preparation was injected to an aluminum mold having a size of 400×400 mm and a thickness of 100 mm, 70 mm or 50 mm and having the mold temperature adjusted at 60°C, with an upper mold opened, and then, quickly the upper mold was closed and foaming and molding were carried out in a sealed state. Upon expiration of 6 minutes after the initiation of molding, the upper mold was opened to obtain a flexible polyurethane foam. Here, the initiation of molding means the point of time when stirring and mixing of the polyol system liquid and the polyisocyanate compound were initiated.

[Evaluation methods]

With respect to the obtained flexible polyurethane foam, the total density, the core density, the 25% ILD hardness, the 65% ILD hardness, the air permeability of the core portion, the entire modulus of repulsion elasticity, the modulus of repulsion elasticity of the core portion, the tear strength, the tensile strength, the elongation, the compression set, the wet thermal compression set (durability) and the hysteresis loss rate (pressing board having a diameter of 200 mm) were measured in accordance with JIS K6400 (1997 edition).

With respect to the stress relaxation rate, the stress relaxation rate (%) after 5 minutes of pressing with 196N by a disk of 314 $cm^2$, was measured.

With respect to the core density and the modulus of repulsion elasticity of the core portion, the respective evaluations were made by using a sample cut out in a size of 100×100 mm with a height of 50 mm from the center portion of the obtained foam.

In the measurement of ILD hardness, the 25% ILD hardness, the 50% ILD hardness and the 65% ILD hardness were measured, and SAG-FACTOR representing the ratio of the 65% ILD hardness to the 25% ILD hardness was obtained. The smaller this value, the less the cushioning limit feeling of the obtainable flexible polyurethane foam.

With respect to other properties, their measurements were carried out by using a sample having a thickness of 100 mm.

As the vibration properties, the resonance frequency, the resonance magnification (absolute displacement measurement), the 6 Hz resonance transmissibility and the 10 Hz resonance transmissibility were measured by methods in accordance with JASO B8407-82. As the measurement conditions for the vibration properties, 鉄研形(490N) was used as a pressurizing board, and the vibration total amplitude was 5 mm.

With respect to the compression set and the wet thermal compression set, the smaller the value, the better the durability.

When the value for the resonance frequency is at most 5 Hz, in a case where the foam is used as a foam for an automobile seat cushion, the vibration in a frequency region sensitive to human is effectively reduced to present a comfortable ride. Also, the smaller the resonance transmissibility, or the 6 Hz or 10 Hz transmissibility, the better the ride.

<EXAMPLE 25>

(Production of rigid polyurethane foam)

As an Example for application to a rigid polyurethane foam, a rigid polyurethane foam was obtained by the following composition. The method for producing a polyurethane foam of the present invention will be described in further detail with reference to the Example of the rigid polyurethane foam, but it should be understood that the present invention is by no means limited to such an Example.

60 Parts by mass of polyol A3-1 (polyester polyol based on p-phthalic acid (trade name: PL272, manufactured by Hitachi Chemical Co., Ltd., hydroxyl value: 230 mgKOH/g, (25°C)), 20 parts by mass of cross-linking agent G-5 (polyether polyol having a hydroxy value of 300 mgKOH/g, obtained by ring-opening addition polymerization of PO and EO in this order by using, as an initiator, a reaction product obtained by reacting 0.75 mol of formaldehyde and 2.2 mol of diethanolamine to 1 mol of nonylphenol), 20 parts by mass of polymer polyol A22-1, 30 parts by mass of a flame retardant (trischloropropyl phosphate (trade name: Fyrol PCF, manufactured by Supresta Japan Co., Ltd.)), 1 part by mass of foam stabilizer J-4 (trade name: SH-193, manufactured by Dow Corning Toray Co.,Ltd), 2 parts by mass of catalyst H-4 (70 mass% DPG solution of (bis-(2-dimethylaminoethyl) ether (trade name: TOYOCAT RX-7, manufactured by Tosoh Corporation)), 2 parts by mass of catalyst H-5 (triazine type isocyanurate catalyst (trade name: POLYCAT 41, manufactured by Air Products Japan, Inc.), 1 part by mass of catalyst H-6 (mixture of quaternary ammonium salt and ethylene glycol (trade name: TOYOCAT TRX, manufactured by Tosoh Corporation) and 5 parts by mass of blowing agent D-1, were weighed and put into a 1 L plastic container, and by means of a mixer equipped with an impeller, stirred and mixed for 30 seconds at a rotational speed of 3,000 rpm to prepare a polyol system liquid.

Then, a polyisocyanate compound (polymethylenepolyphenylene polyisocyanate (crude MDI), trade name: Milionate MR-200, Nippon Polyurethane Industry Co., Ltd.) was weighed and put into a 500 cc plastic container, so that INDEX would be 110.

After adjusting the polyol system liquid and the polyisocyanate compound immediately after preparation to a liquid temperature of 20°C, the polyisocyanate compound was put into the polyol system liquid, and by means of the above mixer, stirred and mixed for 5 seconds at a rotational speed of 3,000 rpm to obtain a reactive mixture. The reactive mixture immediately after preparation was prepared into a foaming feed composition in the above-mentioned procedure and quickly introduced into a wooden box of 20×20×20 cm, to obtain a rigid polyurethane foam.

[Evaluation methods]

With respect to the obtained rigid polyurethane foam, the reactivity, the core density and the dimensional changeability (dimensional stability) were measured by the following methods.

[Reactivity]

The time at the initiation of mixing the polyol system liquid and the polyisocyanate compound was taken as 0 second, whereby the cream time, the gel time and the tack free time were measured.

Cream time: The time until the mixed liquid of the polyol system liquid and the polyisocyanate compound starts to bubble.

Gel time: The time until, along with the progress of gelation, the foaming feed composition starts to thread when a slender glass or metal rod is pushed gently into an upper portion of the foaming feed composition during foaming and then quickly withdrawn.

Tack free time: The time until the foam becomes free from tackiness after completion of the foaming.

[Core density]

With respect to a sample cut out in a size of 10×10 cm from the center portion of the obtained rigid polyurethane foam, the density (unit: $kg/m^3$) was measured by a method in accordance with JIS A9526.

[Dimensional stability]

Evaluation under two conditions of the 70°C high temperature dimensional stability and the -30°C low temperature dimensional stability was carried out in accordance with a method in accordance with ASTM D2126-75.

That is, a sample cut out in 10×15×2.5 cm from the center portion of the rigid polyurethane foam produced as described above, was stored for 24 hours in an atmosphere of 70°C for the high temperature dimensional stability or in an atmosphere of -30°C for the low temperature dimensional stability, whereupon with respect to the longitudinal

(X) direction, the transverse (Y) direction and the thickness (t) direction, the increased length (thickness) was represented by a dimensional change (unit: %) based on the length (thickness) before the storage. In the dimensional change, a negative numerical value means a shrinkage; and the absolute value being large means that the dimensional change is large.

From the results of measurement of the dimensional change, the dimensional stability was evaluated based on the following evaluation standards.

(Evaluation standards)

○ (good): Among the dimensional changes in the three directions, the maximum value among the absolute values was less than 1%.

x (no good): Among the dimensional changes in the three directions, the maximum value among the absolute values was 1% or higher.

[Thermal conductivity]

Measured at an average temperature of 20°C in accordance with JIS A1412 by means of a thermal conductivity measuring apparatus (trade name: Auto Λ HC-074, manufactured by EKO Instruments).

The reactivity of the obtained rigid polyurethane foam was such that the cream time was 6 seconds, the gel time was 12 seconds and the tack free time was 17 seconds, the core density was 28 $kg/m^3$, the maximum of the absolute values among the dimensional changes in the high temperature dimensional stability and the low temperature dimensional stability was less than 1%, and the thermal conductivity was 0.0302 W/m·K, and thus, a good rigid polyurethane foam was obtained.

<EXAMPLE 26>

In the same manner as in Example 25, a rigid polyurethane foam was obtained by using a polyol system liquid prepared by mixing 20 parts by mass of polyol A3-1, 30 parts by mass of cross-linking agent G-6 (polyether polyol having a hydroxy value of 350 mgKOH/g, obtained by ring-opening addition polymerization of EO, PO and EO in this sequence to an initiator by using, as the initiator, tolylenediamine; the amount of addition of the alkylene oxide is 9.9 mol per mol of the tolylenediamine; the proportion of EO in the total of the added EO and PO is 33 mass%; and the viscosity at 25°C is 7,000 mPa·s), 30 parts by mass of cross-linking agent G-7 (polyether polyol having a hydroxy value of 760 mgKOH/g, obtained by ring-opening addition polymerization of only PO to an initiator by using, as the initiator, diethanolamine; and the viscosity at 25°C is 45,000 mPa·s), 20 parts by mass of polymer polyol A22-1, 30 parts by mass of the flame retardant, 1 part by mass of foam stabilizer J-4, 1 part by mass of catalyst H-3 (N,N, N',N'-tetramethylhexamethylenediamine (trade name: TOYOCAT MR, manufactured by Tosoh Corporation)), 1 part by mass of catalyst H-5 and 25 parts by mass of blowing agent D-2 (cyclopentane).

The reactivity of the obtained rigid polyurethane foam was such that the cream time was 15 seconds, the gel time was 72 seconds and the tack free time was 95 seconds, the core density was 27 $kg/m^3$, the maximum of the absolute values among the dimensional changes in the high temperature dimensional stability and the low temperature dimensional stability was less than 1%, and the thermal conductivity was 0.0239 W/m·K, and thus, a good rigid polyurethane foam was obtained.

The method for producing a rigid polyurethane foam of the present invention is applicable to various molding methods.

The molding methods may, for example, be an injection method, a continuous board-forming method and a spray method.

The injection method is a method of injecting a rigid foam material into a frame such as a mold and letting it foam. The continuous board-forming method is a method of supplying a rigid foam material between a pair of surface materials and letting it foam, to produce a laminate having the rigid foam sandwiched between these surface materials, and it is used, for example, for the production of thermal insulation materials for construction. The spray method is a method for applying a rigid foam by spraying.

INDUSTRIAL APPLICABILITY

The polymer polyol obtained by the method of the present invention is capable of improving the physical properties such as the hardness, etc. of a urethane product, without increasing the viscosity of the feed material.

Therefore, it is useful as a material for an injection type urethane to form belts such as timing belts, or casters. It is useful as a material for a thermoplastic urethane material for extrusion molding of films, sheets, etc. or for injection

molding of various components. It may be used as an urethane resin material for coating, such as base resins for various coating materials, or base resins for waterproof coating films. Further, it may be used as a material for other aqueous urethanes, solution-type urethanes or non-solvent type urethanes, which may be used as e.g. ink binders, adhesives, sealing agents, sizing agents, etc. Still further, it may be used as a material for rigid urethane foams or flexible urethane foams.

The entire disclosure of Japanese Patent Application No. 2011-040025 filed on February 25, 2011 including specification, claims, drawings and summary is incorporated herein by reference in its entirety.

## Claims

1. A method for producing a polymer polyol, which comprises polymerizing at least one type of ethylenically unsaturated monomer (M1) together with a seed particle dispersion (E), in a polyol (A), wherein the seed particle dispersion (E) is a dispersion obtained by polymerizing an ethylenically unsaturated monomer (M2) in the presence of an ethylenically unsaturated macromonomer (B), a solvent (C) and a chain transfer agent (D), and the ethylenically unsaturated macromonomer (B) is a reaction product of a polyol (b1) having a hydroxy value of from 20 to 50 mgKOH/g and an oxyethylene group-content of at least 10 mass% and less than 30 mass%, an isocyanate compound (b2) and an ethylenically unsaturated monomer (b3) having a hydroxy group.

2. The method for producing a polymer polyol according to Claim 1, wherein the polyol (b1) a bifunctional polyoxyalkylenediol.

3. The method for producing a polymer polyol according to Claim 1 or 2, wherein the average number of hydroxy groups per one molecule of the ethylenically unsaturated macromonomer (B) is 1.

4. The method for producing a polymer polyol according to any one of Claims 1 to 3, wherein the solvent (C) is an aliphatic ether compound represented by the formula $R^1OR^2$ (wherein each of $R^1$ and $R^2$ is a $C_{1-5}$ alkyl group).

5. The method for producing a polymer polyol according to Claim 4, wherein the aliphatic ether compound is methyl-tert-butyl ether or ethyl-tert-butyl ether.

6. The method for producing a polymer polyol according to any one of Claims 1 to 5, wherein the chain transfer agent (D) is an alkyl mercaptan, and its amount is from 0.01 to 0.5 part by mass per 100 parts by mass of the total of the ethylenically unsaturated macromonomer (B), the solvent (C) and the chain transfer agent (D).

7. The method for producing a polymer polyol according to any one of Claims 1 to 6, wherein the polyol (A) has a hydroxy value of from 10 to 84 mgKOH/g and an oxyethylene group-content of from 0 to 30 mass%.

8. The method for producing a polymer polyol according to any one of Claims 1 to 7, wherein the polyol (A) has a hydroxy value of from 10 to 84 mgKOH/g and an oxyethylene group-content of from 0 to 20 mass%.

9. The method for producing a polymer polyol according to any one of Claims 1 to 8, wherein the ethylenically unsaturated monomer (M1) comprises from 30 to 100 mass% of styrene and from 70 to 0 mass% of acrylonitrile.

10. A polymer polyol obtained by the method for producing a polymer polyol as defined in any one of Claims 1 to 9.

11. The polymer polyol according to Claim 10, wherein the content of the polymer component is from 40 to 60 mass% in the polymer polyol.

12. The polymer polyol according to Claim 10 or 11, wherein the polymer component has an average particle size of at most 1.5 μm as measured by a laser diffraction/scattering particle size distribution measuring apparatus.

13. A method for producing a polyurethane foam, which comprises reacting the polymer polyol as defined in any one of Claims 10 to 12 or a polyol component containing the polymer polyol, and a polyisocyanate compound in the presence of a catalyst and a blowing agent.

## INTERNATIONAL SEARCH REPORT

International application No.
PCT/JP2012/054650

A. CLASSIFICATION OF SUBJECT MATTER
*C08F2/44*(2006.01)i, *C08F283/06*(2006.01)i, *C08F285/00*(2006.01)i, *C08G18/63*(2006.01)i

According to International Patent Classification (IPC) or to both national classification and IPC

B. FIELDS SEARCHED

Minimum documentation searched (classification system followed by classification symbols)
C08F2/00-2/60, C08F283/00-285/00, C08G18/00-18/87

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2006-219517 A (Asahi Glass Co., Ltd.), 24 August 2006 (24.08.2006), claims 1 to 11; paragraphs [0042], [0058] to [0066] (Family: none) | 1-13 |
| Y | JP 8-301949 A (Sanyo Chemical Industries, Ltd.), 19 November 1996 (19.11.1996), claims 1 to 8; paragraphs [0031] to [0040] (Family: none) | 1-13 |
| A | WO 2008/062790 A1 (Asahi Glass Co., Ltd.), 29 May 2008 (29.05.2008), claims 1 to 10 & US 2009/0227696 A1 & EP 2085413 A1 | 1-13 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 22 May, 2012 (22.05.12) | 05 June, 2012 (05.06.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

INTERNATIONAL SEARCH REPORT

International application No.
PCT/JP2012/054650

C (Continuation). DOCUMENTS CONSIDERED TO BE RELEVANT

| Category* | Citation of document, with indication, where appropriate, of the relevant passages | Relevant to claim No. |
|---|---|---|
| P,A | JP 2011-256399 A (Sanyo Chemical Industries, Ltd.), 22 December 2011 (22.12.2011), claims 1 to 13 (Family: none) | 1-13 |
| A | JP 2005-133050 A (Hitachi Kasei Polymer Co., Ltd.), 26 May 2005 (26.05.2005), claims 1 to 5 (Family: none) | 1-13 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 3924737 B
- JP 60017372 B
- JP 63045727 B
- US 4242249 A
- JP 3160610 B
- JP 2002508417 A
- JP 2011040025 A


### Non-patent literature cited in the description


- NONFLEX DCD and NONFLEX OD-R. Seiko Chemical Co., Ltd
- Model No.: Microtrack FRA-9220. Nikkiso Co., Ltd